# EUROPÄISCHE PATENTSCHRIFT

(11) **EP 1 637 535 B1**
(45) Veröffentlichungstag und Bekanntmachung des Hinweises auf die Patenterteilung: **28.02.2007**
(21) Anmeldenummer: 05017817.7
(22) Anmeldetag: 17.08.2005
(51) Int. Cl.: C07F 7/18

(54) **Verfahren zur Herstellung von Mercaptooganyl (alkoxysilanen)**
Process for preparing mercaptoorganyl alkoxy silanes
Procédé pour la préparation des (mercaptoorganyl)-alkoxysilanes

(30) Priorität: 07.09.2004 DE 102004043093; 03.05.2005 DE 102005020534
(43) Veröffentlichungstag der Anmeldung: 22.03.2006
(73) Patentinhaber: Degussa GmbH, 40474 Düsseldorf (DE)
(72) Erfinder: Korth, Karsten, Dr,, 79639 Grenzach-Wyhlen (DE); Albert, Philipp, Dr., 79539 Lörrach (DE); Wolf, Dorit, Dr., 61440 Oberursel (DE); Seebald, Steffen, Dr., 63796 Kahl am Main (DE); Pieter, Reimund, Dr., 64625 Bensheim (DE); Alig, Alfred, 63826 Geiselbach-Omersbach (DE)

(56) Entgegenhaltungen:
- EP-A- 1 285 926
- DE-C- 915 334
- US-A- 5 493 058
- US-B1- 6 433 206
- SMITH BROADMENT H ET AL: "Rhenium sulphides as liquid-phse hydrogenation catalysts. A comparison with molybdenum sulphide and cobalt polysulphide" JOURNAL OF THE AMERICAN CHEMICAL SOCIETY, AMERICAN CHEMICAL SOCIETY, WASHINGTON, DC, US, Bd. 76, 20. März 1954 (1954-03-20), Seiten 1519-1523, XP002227638 ISSN: 0002-7863
- DATABASE BEILSTEIN [Online] BEILSTEIN INSTITUTE FOR ORGANIC CHEMISTRY, FRANKFURT-MAIN, DE; 31. Dezember 1996 (1996-12-31), XP002357068 Database accession no. reaction ID 4695657 & ELIZAGHEID, M. ET AL.: COLLECT. CZECH. CHEM. COMM., Bd. 61, 1996, Seiten S42-S44,

## Beschreibung

Die Erfindung betrifft ein Verfahren zur Herstellung von Mercaptoorganyl(alkoxysilanen).

Aus US 6.147.242 ist ein Verfahren zur Herstellung von 3-Mercaptopropyl-triethoxysilan durch homolytische Spaltung von Bis (alkoxysilylorganyl)disulfiden bekannt. Das . Verfahren beinhaltet das Reagieren von Bis(alkoxysilylorganyl)disulfiden mit einem Alkalimetall und einem Chlorsilan zur Herstellung eines Silylalkylsulfanylsilan-Zwischenprodukts, das anschließend in Gegenwart von Alkohol zum gewünschten Mercaptoalkylsilan umgewandelt wird.
Das Verfahren hat die Nachteile, daß ein zusätzliches Reagenz (Chloralkylsilan) verwendet werden muss, sowie der Notwendigkeit, gefährliches Alkalimetall zu verwenden und zu entsorgen und das Silylalkylsulfanylsilan-Zwischenprodukt vor dem Alkoholyseschritt zu isolieren.

Ferner ist aus US 6.433.206 ein Verfahren zur Herstellung von siliziumhaltigen Organomercaptanen durch Hydrierung von Bis(organylsilyl)polysulfiden unter Verwendung von Gruppe VIII Metallkatalysatoren, die durch Wasser, H₂S bzw. Alkohole vor der Vergiftung bewahrt werden müssen, bekannt.

Dieses Verfahren hat den Nachteil, daß bei Verwendung von Alkoholen als Vergiftungshemmer bzw. Katalysatorentgiftungsreagenz, die ungleich den Alkoholen sind, die für die Substitution der Alkoxysilane verwendet werden, Umesterungen am Siliziumatom der verwendeten Edukte und entstandenen Produkte auftreten können. Dadurch entstehen unerwünschte, gemischt veresterte Silanprodukte. Die Zugabe von Entgiftungsreagenzien ist deshalb aus praktischen und wirtschaftlichen Gesichtspunkten auf solche Alkohole beschränkt, die bereits als Alkoxysilylgruppen im Edukt vorhanden sind.

Ein weiterer Nachteil des Verfahrens ist, daß bei Verwendung von Alkoxysilanen mit langkettigen Alkoxysubstituenten (>C8) als Ausgangsstoff, die Aufarbeitung und destillative Abtrennung der als Entgiftungsreagenzien benötigten Alkohole zunehmend energieintensiver und damit technisch anspruchsvoller und aufwendiger wird.

Die als Entgiftungsreagentien fungierenden Alkohole sind, als Sauerstoffnukleophile, nicht für Polysulfansilane mit jedem Substitutionsmuster als unverzichtbare Entgiftungsreagenzien während der Hydrogenolyse einsetzbar bzw. erwünscht, da sie für Nebenproduktbildungen sorgen können.

Die Auswahl von möglichen Ausgangsstoffen kann durch die unverzichtbare Verwendung von Alkoholen als Entgiftungsreagentien beschränkt sein. Zusätzlich hat das bekannte Verfahren den Nachteil, daß als Alternative zu den Alkoholen nur H₂S oder Wasser verfügbar sind. H₂S ist ein hochgiftiges Gas, dessen Verwendung, Bevorratung, Dosierung und Entsorgung einen hohen Anspruch an Sorgfalt, Risikobereitschaft, Anlagenqualität und -sicherheit stellt. Wasser ist bei der gleichzeitigen Verwendung von Alkoxysilanen zu vermeiden, da es die Ausgangs- und Produktverbindungen unter Hydrolyse zerstört.

Aufgabe der vorliegenden Erfindung ist es, ein Verfahren für die reduktive Spaltung von Bis(alkoxysilylorganyl)-polysulfiden zur Verfügung zu stellen, daß ohne die Verwendung von zusätzlichen Entgiftungsreagenzien, wie Wasser, Alkoholen oder Schwefelwasserstoff, für die benötigten Metallkatalysatoren auskommt und einen hohen Umsatz ermöglicht.

Gegenstand der Erfindung ist ein Verfahren zur Herstellung von Mercaptoorganyl(alkoxysilanen), welches dadurch gekennzeichnet ist, daß man Bis(alkoxysilylorganyl)-polysulfide in einem Lösungsmittel mit Wasserstoff und einem Übergangsmetallkatalysator ohne Zusatz von Alkoholen, H₂S oder Wasser hydriert.

Das Lösungsmittel kann in einem Anteil von 0,1 bis 80 Gew.-%, bevorzugt von 1 bis 50 Gew.-%, ganz besonders bevorzugt von 1 bis 30 Gew.-%, eingesetzt werden.

Die Reaktion kann bevorzugt unter Luft- und Wasserausschluß durchgeführt werden.

Die verwendeten Lösungsmittel können eine Verlängerung der Standzeit der verwendeten Katalysatoren bewirken. Die verwendeten Lösungsmittel können eine einfachere oder verbesserte Handhabung der verwendeten Katalysatoren bewirken. Die verwendeten Lösungsmittel können die Wiederverwendbarkeit der verwendeten Katalysatoren erhöhen.

Die verwendeten Lösungsmittel können einen Siedepunkt von -50°C bis 250°C, vorzugsweise 0-150°C, besonders bevorzugt 20-100°C, haben.

Als Lösungmittel können außer Wasser und H₂S alle nichtalkoholischen Verbindungen eingesetzt werden.

Als Lösungmittel können bevorzugt geradkettige, verzweigte oder auch ringförmige nichtalkoholische Verbindungen, die Sauerstoff-, Schwefel-, Phosphor- oder Stickstoffatome enthalten, eingesetzt werden.

Besonders bevorzugt können Alkane, Ether, Amine, Mercaptane, Dialkylsulfide oder Alkylphosphane eingesetzt werden.

Ganz besonders bevorzugt können Diethylether, Methyltertiär-Butylether, Tetrahydrofuran, Dioxan, Kohlendioxid (flüssig oder als überkritisches Fluid), Ammoniak, Pentan, Hexan, Heptan, Oktan, DMF oder die als Produkte entstehenden Mercaptoalkyl(alkoxysilane) eingesetzt werden.

Das Lösungsmittel kann eine ionische Flüssigkeit oder eine Kombination oder Mischung von ionischen Flüssigkeiten sein.

Die verwendeten ionischen Flüssigkeiten können als CoKatalysator wirken.

Die verwendeten ionischen Flüssigkeiten können eine Zunahme des Umsatzes bewirken.

Die verwendeten ionischen Flüssigkeiten können eine Zunahme der Aktivität bewirken.

Die verwendeten ionischen Flüssigkeiten können eine Zunahme der Selektivität bewirken.

Die verwendeten ionischen Flüssigkeiten können einen Schmelzpunkt von 0-250°C, vorzugsweise 50-180°C, besonders bevorzugt 80-150°C, haben.

Eine ionische Flüssigkeit kann aus einer homogenen Verbindung gebildet werden, die einen Typ von Kation und einem Typ von Anion enthält. Eine ionische Flüssigkeit kann aus Verbindungen gebildet werden, die mehrere Kationentypen und mehrere Anionentypen enthalten. Eine ionische Flüssigkeit kann aus Verbindungen gebildet werden, die einen Kationentyp und mehrere Aniontypen enthalten. Eine ionische Flüssigkeit kann aus Verbindungen gebildet werden, die mehrere Kationentypen und einen Aniontyp enthalten.

Eine ionische Flüssigkeit kann aus einem Salz bestehen, d.h. mindestens einem Kationenetyp und mindestens einem Aniontyp, welches unter den gewählten Reaktionsbedingungen flüssig vorliegt.

Ionische Flüssigkeiten können sehr geringe Dampfdrücke (theoretisch nahe null) besitzen, was für viele Anwendungen vorteilhaft ist.

Ionische Flüssigkeiten können aus organischen Salzen bestehen, bevorzugt aus Salzen heterocyclischer Stickstoffverbindungen.

Ionische Flüssigkeiten können Salze von alkylierten oder polyalkylierten Heteroaromaten enthalten. Alkylierte oder polyalkylierte Heteroaromate können alkylierte Pyridine, Pyridazine, Pyrimidine, Pyrazine, Imidazole, Pyrazole, Oxazole oder Triazole sein. Die Alkylsubstituenten können Kettenlängen von C1-C40 besitzen und geradkettig, verzweigt oder substituiert sein. Die Alkylsubstituenten können gleich oder unterschiedlich sein.

Ionische Flüssigkeiten können aus Salzen von substituierten Ammonium- N(Alkyl)₃(R')⁽⁺⁾, 1,3-Dialkylimidazolium Ionen oder Phosphoniumionen P{Alkyl}₃(R')⁽⁺⁾ bestehen.

Als Kationen können beispielswiese die Kationentypen bmim, bm₂im, emim, ommim, mmim, bupy, C₆Py, C₈Py, N_{8,8,8,1}, N_{6,2,2,2}, [MeNEt₃], [MeNBu₃], [MeNPent₃], [MeNHex₃] eingesetzt werden.

Die Kationen können einfach oder mehrfach positiv geladen sein. Die Anionen können einfach oder mehrfach negativ geladen sein.

Als Anionen können Phosphate, Amide, Sulfate, Tetrachloro(aluminate), Sulphite, Nitrate, Nitrite, Alkylsulfate, Alkylsulfonate oder Halogenide eingesetzt werden.

Als Anionen können beispielsweise Chlorid, Bromid, Iodid, HSO₄⁽⁻⁾, BF₄⁽⁻⁾, BCl₄⁽⁻⁾, PF₆⁽⁻⁾, ASF₆⁽⁻⁾, SbF₆⁽⁻⁾, HCO₃⁽⁻⁾, Lactate, Saccharinate, Al(Cl)₄⁽⁻⁾, Al₂(Cl)₇⁽⁻⁾, Al₃Cl₁₀ ⁽⁻⁾ , CuCl₂⁽⁻⁾, Cu₂Cl₃⁽⁻⁾, Cu₃Cl₄⁽⁻⁾, SnCl₃⁽⁻⁾, Sn₂Cl₅⁽⁻⁾, CH₃-SO₄⁽⁻⁾, CH₃-CH₂-SO₄⁽⁻⁾, CF₃-SO₃⁽⁻⁾, CH₃-SO₃⁽⁻⁾, CF₃-COO⁽⁻⁾, C₈H₁₇-(SO₄)⁽⁻⁾, C₁₆H₃₃-(SO₄)⁽⁻⁾, bis [(trifluoromethyl) sulfonyl] amid, Tosylat eingesetzt werden.

Als ionische Flüssigkeiten können beispielsweise Mischungen von LiAlCl₄ - AlCl₃, NaAlCl₄ - AlCl₃, KAlCl₄ - AlCl₃, MgAlCl₄ - AlCl₃, NaAlCl₄ - KAlCl₄, NaAlCl₄ - KAlCl₄- AlCl₃, NaAlCl₄ - Kalt14- MgCl₂, KAlCl₄ - Ca(AlCl₄)₂ oder NaAlCl₄ - KAlCl₄ - LiAlCl₄ eingesetzt werden. Eutektika der Mischungen, oder Mischungen nahe dem eutektischen Punkt können bevorzugt eingesetzt werden.

Als ionische Flüssigkeiten können beispielsweise LiAlCl₄, NaAlCl₄, KAlCl₄, Mg{AlCl₄}₂ oder Ca(AlCl₄)₂ eingesetzt werden.

Die Kationen und Anionen können denen von P. Wasserscheid und W. Keim in Angew. Chem. Int. Ed. 2000, 39, 3773 genannten entsprechen.

Die Kationen und Anionen können denen von T. Welton in Chem. Rev. 1999, 99, 2071 genannten entsprechen.

Das zu hydrierende Bis(alkoxysilylorganyl)polysulfid kann mit einem polaren oder unpolaren, protischen oder aprotischen Stoff gemischt sein.

Das Bis(alkoxysilylorganyl)polysulfide kann eine Verbindung der allgemeinen Formel (I) entsprechen,

Z-A-Sₓ-A-Z (I)

wobei x eine Zahl von 1 bis 14, vorzugsweise 1 bis 8, bevorzugt 2 bis 4, besonders bevorzugt 2-2,6, ist,
Z gleich oder verschieden SiX¹X²X³ oder Si(OCH₂-CH₂-)₃N ist und
X¹, X², X³ jeweils unabhängig voneinander bedeuten können Hydroxy (-OH),
eine lineare oder verzweigte oder ringförmige Kohlenwasserstoffkette mit 1-18 Kohlenstoffatomen (C1-C18), bevorzugt mit C1-C10, vorzugsweise Methyl- ,Ethyl-, Propyl- oder Butyl-,
ein Alkylsäure- (C_{y}H_{2y+1})-C(=O)O- mit y=1-25, Alkenylsäuresubstituent, beispielsweise Acetoxy-CH₃-(C=O)O-,
ein substituierter Alkyl-, beziehungsweise Alkenylsäuresubstituent, ein Cycloalkanrest mit 5-12 Kohlenstoffatomen,
ein Benzylrest, ein halogen- oder alkylsubstituierter Phenylrest,
Alkoxygruppen, vorzugsweise (C₁-C₂₄) Alkoxy, mit linearen oder verzweigten Kohlenwasserstoffketten, besonders bevorzugt sind Methoxy- (CH₃O-), Ethoxy- (C₂H₅O-), Propoxy-(C₃H₇O-), Butoxy- (C₄H₉O-), Dodecyloxy- (C₁₂H₂₅O-), Tetradecyloxy- (C₁₄H₂₉O-), Hexadecyloxy- (C₁₆H₃₃O-) oder Octadecyloxy- (C₁₈H₃₇O-),
eine Cycloalkoxygruppe mit (C₅₋₁₂)-Atomen,
eine halogen- oder alkylsubstituierte Phenoxygruppe,
eine Benzyloxygruppe,
eine Alkylethergruppe O-(CR^{I}₂- CR^{I}₂) -O-Alk oder
eine Alkylpolyethergruppe O-(CRI₂- CR^{I}₂O)ₐ-Alk, mit a = 2-25, bevorzugt a = 2-15, besonders bevorzugt a = 3-10, ganz besonders bevorzugt a = 3-6, R^{I} unabhängig voneinander H oder Alkylgruppe, vorzugsweise eine CH₃-Gruppe ist, Alk eine lineare oder verzweigte, gesättigte oder ungesättigte Alkylkette mit 1-30 Kohlenstoffatomen (C1-C30), bevorzugt C1-C20, besonders bevorzugt C4-C18, ganz besonders bevorzugt C8-C16,
A eine lineare oder verzweigte, gesättigte oder ungesättigte aliphatische, aromatische oder gemischt aliphatische/aromatische zweibindige C₁-C₃₀ umfassende Kohlenwasserstoffkette, vorzugsweise C₁-C₃, besonders bevorzugt (-CH₂-), (-CH₂-)₂, (-CH₂-)₃, (-CH(CH₃)-CH₂-) oder (-CH₂-CH (CH₃)-), ist.

A kann linear oder verzweigt sein und gesättigte wie auch ungesättigte Bindungen enthalten. A kann anstatt mit Wasserstoffsubstituenten mit verschiedensten Substituenten versehen sein, wie zum Beispiel -CN, Halogenen, beispielsweise -Cl, -Br oder -F, Alkoholfunktionalitäten-OH, Alkoxiden. Als A können bevorzugt CH₂, CH₂CH₂, CH₂CH₂CH₂, CH₂CH(CH₃), CH₂CH₂CH₂CH₂, CH₂CH₂CH(CH₃), CH₂CH(CH₃)CH₂, CH₂CH₂CH₂CH₂CH₂, CH₂CH(CH₃)CH₂CH₂, CH₂CH₂CH(CH₃)CH₂, CH(CH₃)CH₂CH(CH₃) oder CH₂CH(CH₃)CH(CH₃) eingesetzt werden.

Als Silan der allgemeinen Formel (I) kann man beispielsweise folgende Verbindungen verwenden:
[(MeO)₃Si(CH₂)₃]₂S₂, [(MeO)₃Si(CH₂)₃]2S₃, [(MeO)₃Si(CH₂)₃]₂S₄,
[(MeO)₃Si(CH₂)₃]₂S₅, [(MeO)₃Si(CH₂)₃]₂S₆, [(MeO)₃Si(CH₂)₃]₂S₇,
[(MeO)₃Si(CH₂)₃]₂S₈, [(MeO)₃Si(CH₂)₃]₂S₉, [(MeO)₃Si(CH₂)₃]₂S₁₀,
[(MeO)₃Si(CH₂)₃]₂S₁₁, [(MeO)₃Si(CH₂)₃]₂S₁₂, [(EtO)₃Si(CH₂)₃]₂S₂,
[(EtO)₃Si(CH₂)₃]₂S₃, [(EtO)₃Si(CH₂)₃]₂S₄, [(EtO)₃Si(CH₂)_{3]2}S₅,
[(EtO)₃Si(CH₂)_{3]2}S₆, [(EtO)₃Si(CH₂)₃]₂S₇, [(EtO)₃Si(CH₂)₃]₂S₈,
[(EtO)₃Si(CH2)3]₂S₉, [(EtO)₃Si(CH₂)₃]₂S₁₀, [(EtO)₃Si(CH₂)₃]₂S₁₁,
[(EtO)₃Si(CH₂)₃]₂S₁₂, [(EtO)₃Si(CH₂)₃]₂S₁₃, [(EtO)₃Si(CH₂)₃]₂S₁₄,
[(C₃H₇₀)₃Si(CH₂)₃]₂S₂, [(C₃H₇O)₃Si(CH₂)3]₂S₃,
[(C₃H₇O)₃Si(CH₂)3]₂S₄, [(C₃H₇O)₃Si(CH₂)₃]₂S₅,
[(C₃H₇O)₃Si(CH₂)₃]₂S₆, [(C₃H₇O)₃Si(CH₂)₃]₂S₇,
[(C₃H₇O)₃Si(CH₂)₃]₂S₈, [(C₃H₇O)₃Si(CH₂)₃]₂S₉,
[(C₃H₇O)₃Si(CH₂)₃]₂S₁₀, [(C₃H₇O)₃Si(CH₂)₃]₂S₁₁,
[(C₃H₇O)₃Si(CH₂)₃]₂S₁₂, [(C₃H₇O)₃Si(CH₂)₃]₂S₁₃,
[(C₃H₇O)₃Si(CH₂)₃]₂S₁₄,
[(C₁₂H₂₅O)(EtO)₂Si(CH₂)₃]Sₓ[(CH₂)₃Si(OEt)₃],
[(C₁₂H₂₅O)₂(EtO)Si(CH₂)₃]Sₓ[(CH₂)₃Si(OEt)₃],
[(C₁₂H₂₅O)₃Si(CH₂)₃]Sₓ[(CH₂)₃Si(OEt)₃],
[(C₁₂H₂₅O)(EtO)₂Si(CH₂)₃]Sₓ[(CH₂)₃Si(C₁₂H₂₅O)(OEt)₂],
[(C₁₂H₂₅O)₂(EtO)Si(CH₂)₃]Sₓ[(CH₂)₃Si(C₁₂H₂₅O)(OEt)₂],
[(C₁₂H₂₅O)₃Si(CH₂)₃]Sₓ[(CH₂)₃Si(C₁₂H₂₅O)(OEt)₂],
[(C₁₂H₂₅O)(EtO)₂Si(CH₂)₃]Sₓ[(CH₂)₃Si(C₁₂H₂₅O)₂(OEt)],
[(C₁₂H₂₅O)₂(EtO)Si(CH₂)₃]Sₓ[(CH₂)₃Si(C₁₂H₂₅O)₂(OEt)],
[(C₁₂H₂₅O)₃Si(CH₂)₃]Sₓ[(CH₂)₃Si(C₁₂H₂₅O)₂(OEt)],
[(C₁₂H₂₅O)(EtO)₂Si(CH₂)₃]Sₓ[(CH₂)₃Si(C₁₂H₂₅O)₃],
[(C₁₂H₂₅O)₂(EtO)Si(CH₂)₃]Sₓ[(CH₂)₃Si(C₁₂H₂₅O)₃],
[(C₁₂H₂₅O)₃Si(CH₂)₃]Sₓ[(CH₂)₃Si(C₁₂H₂₅O)₃],
(C₁₄H₂₉O)(EtO)₂Si(CH₂)₃]Sₓ[(CH₂)₃Si(OEt)₃],
[(C₁₄H₂₉O)₂(EtO)Si(CH₂)₃]Sₓ[(CH₂)₃Si(OEt)₃],
[(C₁₄H₂₉O)₃Si(CH₂)₃]Sₓ[(CH₂)₃Si(OEt)₃],
[(C₁₄H₂₉O)(EtO)₂Si(CH₂)₃]Sₓ[(CH₂)₃Si(C₁₄H₂₉O)(OEt)₂],
[(C₁₉H₂₉O)₂(EtO)Si(CH₂)₃]Sₓ[(CH₂)₃Si(C₁₄H₂₉O)(OEt)₂],
[(C₁₄H₂₉O)₃si(CH₂)₃]Sₓ[(CH₂)₃Si(C₁₄H₂₉O)(OEt)₂],
[(C₁₄H₂₉O)(EtO)₂Si(CH₂)₃]Sₓ[(CH₂)₃Si(C₁₄H₂₉O)₂(OEt)],
[(C₁₄H₂₉O)₂(EtO)Si(CH₂)₃]Sₓ[(CH₂)₃Si(C₁₄H₂₉O)₂(OEt)],
[(C₁₄H₂₉O)₃Si(CH₂)₃]Sₓ[(CH₂)₃Si(C₁₄H₂₉O)₂(OEt)],
[(C₁₄H₂₉O)(EtO)₂Si(CH₂)₃]Sₓ[(CH₂)₃Si(C₁₄H₂₉O)₃],
[(C₁₄H₂₉O)₂(EtO)Si(CH₂)₃]Sₓ[(CH₂)₃Si(C₁₄H₂₉O)3],
[(C₁₄H₂₉O)₃Si(CH₂)₃]Sₓ[(CH₂)₃Si(C₁₄H₂₉O)₃],
[(C₁₆H₃₃O)(EtO)₂Si(CH₂)₃]Sₓ[(CH₂)₃Si(OEt)₃],
[(C₁₆H₃₃O)₂(EtO)Si(CH₂)₃]Sₓ[(CH₂)₃Si(OEt)₃],
[(C₁₆H₃₃O)₃Si(CH₂)₃]Sₓ[(CH₂)₃Si(OEt)₃],
[(C₁₆H₃₃O)(EtO)₂Si(CH₂)₃]Sₓ[(CH₂)₃Si(C₁₆H₃₃O)(OEt)₂],
[(C₁₆H₃₃O)₂(EtO)Si(CH₂)₃]Sₓ(CH₂)₃Si(C₁₆H₃₃O)(OEt)₂],
[(C₁₆H₃₃O)₃Si(CH₂)₃]Sₓ[(CH₂)₃Si(C₁₆H₃₃O)(OEt)₂],
[(C₁₆H₃₃O)(EtO)₂Si(CH₂)₃]Sₓ[(CH₂)₃Si(C₁₆H₃₃O)₂(OEt)],
[(C₁₆H₃₃O)₂(EtO)Si(CH₂)₃]Sₓ[(CH₂)₃Si(C₁₆H₃₃O)₂(OEt)],
[(C₁₆H₃₃O)₃Si(CH₂)₃]Sₓ[(CH₂)₃Si(C₁₆H₃₃O)₂(OEt)],
[(C₁₆H₃₃O)(EtO)₂Si(CH₂)₃]Sₓ[(CH₂)₃Si(C₁₆H₃₃O)₃],
[(C₁₆H₃₃O)₂(EtO)Si(CH₂)₃]Sx[(CH₂)₃Si(C₁₆H₃₃O)₃],
[(C₁₆H₃₃O)₃Si(CH₂)₃]Sₓ[(CH₂)₃Si(C₁₆H₃₃O)₃],
[(C₁₈H₃₇O)(EtO)₂Si(CH₂)₃]Sₓ[(CH₂)₃Si(OEt)₃],
[(C₁₈H₃₇O)₂(EtO)Si(CH₂)₃]Sₓ[(CH₂)₃Si(OEt)₃],
[(C₁₈H₃₇O)₃Si(CH₂)₃]Sx[(CH₂)₃Si(OEt)₃],
[(C₁₈H₃₇O)(EtO)₂Si(CH₂)₃]Sₓ[(CH₂)₃Si(C₁₈H₃₇O)(OEt)₂],
[(C₁₈H₃₇O)₂(EtO)Si(CH₂)₃]Sₓ[(CH₂)₃Si(C₁₈H₃₇O)(OEt)₂],
[(C₁₈H₃₇O)₃Si(CH₂)₃]Sₓ[(CH₂)₃Si(C₁₈H₃₇O)(OEt)₂],
[(C₁₈H₃₇O)(EtO)₂Si(CH₂)₃]Sₓ[(CH₂)₃Si(C₁₈H₃₇O)₂(OEt)],
[(C₁₈H₃₇O)₂(EtO)Si(CH₂)₃]Sₓ[(CH₂)₃Si(C₁₈H₃₇O)₂(OEt)],
[(C₁₈H₃₇O)₃Si(CH₂)₃]Sₓ[(CH₂)₃Si(C₁₈H₃₇O)₂(OEt)],
[(C₁₈H₃₇O)(EtO)₂Si(CH₂)₃]Sx[(CH₂)₃Si(C₁₈H₃₇O)₃],
[(C₁₈H₃₇O)₂(EtO)Si(CH₂)₃]Sₓ[(CH₂)₃Si(C₁₈H₃₇O)₃] oder
[(C₁₈H₃₇O)₃Si(CH₂)₃]Sₓ[(CH₂)₃Si(C₁₈H₃₇O)₃].

Die als Ausgangsstoff benötigten Bis(alkoxysilylorganyl)-polysulfide können eine Mischung aus verschiedenen Bis(alkoxysilylorganyl)polysulfiden mit -S₁- bis -S₁₄- oder ein Bis(alkoxysilylorganyl)polysulfid mit einer Schwefelkettenlänge sein.

Vorzugsweise können als Bis(alkoxysilylorganyl)polysulfide Bis(alkoxysilylorganyl)disulfide mit einer mittleren Kettenlänge von Sₓ = S₂ bis S_{2,7} (-Sₓ- für x=2-14 kann bestimmt werden durch HPLC oder ¹H-NMR ) eingesetzt werden.

Die Gruppe Z = -SiX¹X²X³ kann vorzugsweise -Si (OMe) ₃,-Si(OEt)₃, -SiMe(OMe)₂, -SiMe(OEt)₂), -SiMe₂(OMe),-SiMe₂(OEt), -Si(OC₁₂H₂₅)₃, Si(OC₁₄H₂₉)₃, Si(OC₁₆H₃₃)₃, Si(OC₁₈H₃₇)₃, Si(OC₁₄H₂₉)₂(OC₁₆H₃₃), Si(OC₁₄H₂₉)₂(OC₁₈H₃₇), Si(OC₁₆H₃₃)₂(OC₁₄H₂₉), Si(OC₁₆H₃₃)₂(OC₁₈H₃₇), Si(OC₁₈H₃₇)₂(OC₁₆H₃₃) oder Si(OC₁₄H₂₉)(OC₁₈H₃₇)₂ sein.
Als Bis(alkoxysilylorganyl)polysulfid kann Si 266, Si 266/2 Si 261, Si 75 und Si 69 der Degussa AG, Silquest A 1589, Silquest A 1289 oder Silquest A 15304 der General Electric-Osi, KBE 846 oder KBE 856 der Shin-Etsu Chemical Co. Ltd., Cabrus 4, Cabrus 2A oder Cabrus 2B der Daiso Co. Ltd. oder HP 669 oder HP 1589 der Hung Pai Chemical Company eingesetzt werden.

Das Bis(alkoxysilylorganyl)polysulfid kann herstellungsbedingt 0,01 bis 5 Gew.-% 3-Chlororganyl(alkoxysilan) enthalten.

Das Bis(alkoxysilylorganyl)polysulfid kann herstellungsbedingt 0,001 bis 1 Gew.-% elementaren Schwefel enthalten.

Das Bis(alkoxysilylorganyl)polysulfid kann herstellungsbedingt 0,001 bis 1 Gew.-% Alkohol enthalten.

Das gebildete Mercaptoorganyl(alkoxysilan) kann eine Verbindung der allgemeinen Formel (II)

Z-A-SH (II)

sein, wobei Z und A, jeweils unabhängig voneinander, die Bedeutung gemäß Formel (I) haben.

Die Gruppe SiX¹X²X³ kann in Formel II vorzugsweise -Si(OMe)₃, -Si(OMe)₂OH, -Si(OMe)(OH)₂, -Si(OEt)₃,-Si(OEt)₂OH, -Si(OEt)(OH)₂, -SiMe(OMe)₂, -SiMe(OEt)₂),-SiMe(OH)₂, -SiMe₂(OMe), -SiMe₂(OEt), SiMe₂(OH), -Si[-O(CO)CH₃]₃, -Si(OC₁₂H₂₅)₃, Si(OC₁₄H₂₉)₃, Si(OC₁₆H₃₃)₃, Si(OC₁₈H₃₇)₃, Si(OC₁₄H₂₉)₂(OC₁₆H₃₃), Si(OC₁₄H₂₉)₂(OC₁₈H₃₇), Si(OC₁₆H₃₃)₂(OC₁₄H₂₉), Si(OC₁₆H₃₃)₂(OC₁₈H₃₇), Si(OC₁₈H₃₇)₂(OC₁₆H₃₃), Si(OC₁₄H₂₉)(OC₁₈H₃₇)₂ sein.

Das gebildete Mercaptoorganyl(alkoxysilan) kann eine Mischung von Verbindungen der allgemeinen Formel (II) sein.

Beispielsweise können Mercaptoorganyl(alkoxysilane) der allgemeinen Formel (II) sein:
3-Mercaptopropyl(trimethoxysilan),
   3-Mercaptopropyl(dimethoxyhydroxysilan),
   3-Mercaptopropyl (triethoxysilan);
   3-Mercaptopropyl(diethoxyhydroxysilan),
   3-Mercaptopropyl(diethoxymethoxysilan),
   3-Mercaptopropyl (tripropoxysilan),
   3-Mercaptopropyl(dipropoxymethoxysilan),
   3-Mercaptopropyl(dipropoxyhydroxysilan),
   3-Mercaptopropyl(tridodecanoxysilan),
   3-Mercaptopropyl(didodecanoxyhydroxysilan),
   3-Mercaptopropyl(tritetradecanoxysilan),
   3-Mercaptopropyl(trihexadecanoxysilan),
   3-Mercaptopropyl(trioctadecanoxysilan),
   3-Mercaptopropyl(didodecanoxy)tetradecanoxysilan,
   3-Mercaptopropyl (dodecanoxy) tetradecanoxy (hexadecanoxy) silan,
3-Mercaptopropyl(dimethoxymethylsilan),
   3-Mercaptopropyl (methoxymethylhydroxysilan),
   3-Mercaptopropyl(methoxydimethylsilan),
   3-Mercaptopropyl (hydroxydimethylsilan),
   3-Mercaptopropyl (diethoxymethylsilan),
   3-Mercaptopropyl (ethoxyhydroxymethylsilan),
   3-Mercaptopropyl (ethoxydimethylsilan),
3-Mercaptopropyl (dipropoxymethylsilan),
   3-Mercaptopropyl (propoxymethylhydroxysilan),
   3-Mercaptopropyl(propoxydimethylsilan),
   3-Mercaptopropyl(diisopropoxymethylsilan),
   3-Mercaptopropyl(isopropoxydimethylsilan),
   3-Mercaptopropyl(dibutoxymethylsilan),
   3-Mercaptopropyl(butoxydimethylsilan),
   3-Mercaptopropyl(disiobutoxymethylsilan),
   3-Mercaptopropyl(siobutoxymethylhydroxysilan),
   3-Mercaptopropyl(isobutoxydimethylsilan),
   3-Mercaptopropyl (didodecanoxymethylsilan),
   3-Mercaptopropyl(dodecanoxydimethylsilan),
   3-Mercaptopropyl(ditetradecanoxymethylsilan),
   3-Mercaptopropyl(tetradecanoxymethylhydroxysilan),
   3-Mercaptopropyl (tetradecanoxydimethylsilan),
2-Mercaptoethyl(trimethoxysilan),
   2-Mercaptoethyl (triethoxysilan),
   2-Mercaptoethyl(diethoxymethoxysilan),
   2-Mercaptoethyl(tripropoxysilan),
   2-Mercaptoethyl(dipropoxymethoxysilan),
   2-Mercaptoethyl(tridodecanoxysilan),
   2-Mercaptoethyl (tritetradecanoxysilan),
   2-Mercaptoethyl(trihexadecanoxysilan),
   2-Mercaptoethyl(trioctadecanoxysilan),
   2-Mercaptoethyl(didodecanoxy)tetradecanoxysilan,
   2-Mercaptoethyl(dodecanoxy)tetradecanoxy(hexadecanoxy) silan,
2-Mercaptoethyl(dimethoxymethylsilan),
   2-Mercaptoethyl(methoxymethylhydroxysilan),
   2-Mercaptoethyl (methoxydimethylsilan),
   2-Mercaptoethyl(diethoxymethylsilan),
   2-Mercaptoethyl(ethoxydimethylsilan),
   2-Mercaptoethyl(hydroxydimethylsilan),
1-Mercaptomethyl(trimethoxysilan),
   1-Mercaptomethyl(triethoxysilan),
   1-Mercaptomethyl(diethoxymethoxysilan),
   1-Mercaptomethyl (diethoxyhydroxysilan),
   1-Mercaptomethyl(dipropoxymethoxysilan),
   1-Mercaptomethyl(tripropoxysilan),
   1-Mercaptomethyl(trimethoxysilan),
   1-Mercaptomethyl(dimethoxymethylsilan),
   1-Mercaptomethyl(methoxydimethylsilan),
   1-Mercaptomethyl(diethoxymethylsilan),
   1-Mercaptomethyl(ethoxymethylhydroxysilan),
   1-Mercaptomethyl (ethoxydimethylsilan),
3-Mercaptobutyl(trimethoxysilan),
   3-Mercaptobutyl (triethoxysilan),
   3-Mercaptobutyl(diethoxymethoxysilan),
   3-Mercaptobutyl (tripropoxysilan),
   3-Mercaptobutyl(dipropoxymethoxysilan),
   3-Mercaptobutyl(dimethoxymethylsilan),
   3-Mercaptobutyl(diethoxymethylsilan),
   3-Mercaptobutyl(dimethylmethoxysilan),
   3-Mercaptobutyl(dimethylethoxysilan),
   3-Mercaptobutyl(dimethylhydroxysilan),
   3-Mercaptobutyl(tridodecanoxysilan),
   3-Mercaptobutyl(tritetradecanoxysilan),
   3-Mercaptobutyl(trihexadecanoxysilan),
   3-Mercaptobutyl(didodecanoxy)tetradecanoxysilan,
   3-Mercaptobutyl (dodecanoxy) tetradecanoxy (hexadecanoxy) silan,
3-Mercapto-2-methyl-propyl(trimethoxysilan),
   3-Mercapto-2-methyl-propyl(triethoxysilan),
   3-Mercapto-2-methyl-propyl(diethoxymethoxysilan),
   3-Mercapto-2-methyl-propyl(tripropoxysilan),
   3-Mercapto-2-methyl-propyl(dipropoxymethoxysilan),
   3-Mercapto-2-methyl-propyl(tridodecanoxysilan),
   3-Mercapto-2-methyl-propyl(tritetradecanoxysilan),
   3-Mercapto-2-methyl-propyl(trihexadecanoxysilan),
   3-Mercapto-2-methyl-propyl(trioctadecanoxysilan),
   3-Mercapto-2-methyl-propyl(didodecanoxy) tetradecanoxysilan,
   3-Mercapto-2-methyl-propyl(dodecanoxy)tetradecanoxy-(hexadecanoxy)silan,
   3-Mercapto-2-methyl-propyl(dimethoxymethylsilan),
   3-Mercapto-2-methyl-propyl(methoxydimethylsilan),
   3-Mercapto-2-methyl-propyl(diethoxymethylsilan),
   3-Mercapto-2-methyl-propyl(ethoxydimethylsilan),
   3-Mercapto-2-methyl-propyl(hydroxydimethylsilan),
   3-Mercapto-2-methyl-propyl(dipropoxymethylsilan),
   3-Mercapto-2-methyl-propyl(propoxydimethylsilan),
   3-Mercapto-2-methyl-propyl(diisopropoxymethylsilan),
   3-Mercapto-2-methyl-propyl(isopropoxydimethylsilan),
   3-Mercapto-2-methyl-propyl(dibutoxymethylsilan),
   3-Mercapto-2-methyl-propyl(butoxydimethylsilan),
   3-Mercapto-2-methyl-propyl(disiobutoxymethylsilan),
   3-Mercapto-2-methyl-propyl(isobutoxydimethylsilan),
   3-Mercapto-2-methyl-propyl(didodecanoxymethylsilan),
   3-Mercapto-2-methyl-propyl(dodecanoxydimethylsilan),
   3-Mercapto-2-methyl-propyl(ditetradecanoxymethylsilan) oder
   3-Mercapto-2-methyl-propyl (tetradecanoxydimethylsilan).
[(C₉H₁₉O-(CH₂-CH₂O)₂](MeO)₂Si(CH₂)₃SH,
   [(C₉H₁₉O-(CH₂-CH₂O)₃](MeO)₂Si(CH₂)₃SH,
   [(C₉H₁₉O-(CH₂-CH₂O)₄](MeO)₂Si(CH₂)₃SH,
   (C₉H₁₉O-(CH₂-CH₂O)₅](MeO)₂Si(CH₂)₃SH,
   [(C₉H₁₉O-(CH₂-CH₂O)₆](MeO)₂Si(CH₂)₃SH,
[(C₁₂H₂₅O-(CH₂-CH₂O)₂](MeO)₂Si(CH₂)₃SH,
   [(C₁₂H₂₅O-(CH₂-CH₂O)₃](MeO)₂Si(CH₂)₃SH,
   [(C₁₂H₂₅O-(CH₂-CH₂O)₄](MeO)₂Si(CH₂)₃SH,
   [(C₁₂H₂₅O-(CH₂-CH₂O)₅](MeO)₂Si(CH₂)₃SH,
   [(C₁₂H₂₅O-(CH₂-CH₂O)₆](MeO)₂Si(CH₂)₃SH,
[(C₁₃H₂₇O-(CH₂-CH₂O)₂](MeO)₂Si(CH₂)₃SH,
   [(C₁₃H₂₇O-(CH₂-CH₂O)₃](MeO)₂Si(CH₂)₃SH,
   [(C₁₃H₂₇O-(CH₂-CH₂O)₄](MeO)₂Si(CH₂)₃SH,
   [(C₁₃H₂₇O-(CH₂-CH₂O)₅](MeO)₂Si(CH₂)₃SH,
   [(C₁₃H₂₇O-(CH₂-CH₂O)₆](MeO)₂Si(CH₂)₃SH,
[(C₁₄H₂₉O-(CH₂-CH₂O)₂](MeO)₂Si(CH₂)₃SH,
   [(C₁₉H₂₉O-(CH₂-CH₂O)₃](MeO)₂Si(CH₂)₃SH,
   [(C₁₄H₂₉O-(CH₂-CH₂O)₄](MeO)₂Si(CH₂)₃SH,
   [(C₁₄H₂₉O-(CH₂-CH₂O)₅](MeO)₂Si(CH₂)₃SH,
   [(C₁₄H₂₉O-(CH₂-CH₂O)₆](MeO)₂Si(CH₂)₃SH,
[(C₉H₁₉O-(CH₂-CH₂O)₂]₂(MeO)Si(CH₂)₃SH,
   [(C₉H₁₉O-(CH₂-CH₂O)₃]₂(MeO)Si(CH₂)₃SH,
   [(C₉H₁₉O-(CH₂-CH₂O)₄]₂(MeO)Si(CH₂)₃SH,
   [(C₉H₁₉O-(CH₂-CH₂O)₅]₂(MeO)Si(CH₂)₃SH,
   [(C₉H₁₉O-(CH₂-CH₂O)₆]₂(MeO)Si(CH₂)₃SH,
[(C₁₂H₂₅O-(CH₂-CH₂O)₂]₂(MeO)Si(CH₂)₃SH,
   [(C₁₂H₂₅O-(CH₂-CH₂O)₃]₂(MeO)Si(CH₂)₃SH,
   [(C₁₂H₂₅O-(CH₂-CH₂O)₄]₂(MeO)Si(CH₂)₃SH,
   [(C₁₂H₂₅O-(CH₂-CH₂O)₅]₂(MeO)Si(CH₂)₃SH,
   [(C₁₂H₂₅O-(CH₂-CH₂O)₆]₂(MeO)Si(CH₂)₃SH,
[(C₁₃H₂₇O-(CH₂-CH₂O)₂]₂(MeO)Si(CH₂)₃SH,
   [(C₁₃H₂₇O-(CH₂-CH₂O)₃]₂(MeO)Si(CH₂)₃SH,
   [(C₁₃H₂₇O-(CH₂-CH₂O)₄]₂(MeO)Si(CH₂)₃SH,
   [(C₁₃H₂₇O-(CH₂-CH₂O)₅]₂(MeO)Si(CH₂)₃SH,
   [(C₁₃H₂₇O-(CH₂-CH₂O)₆]₂(MeO)Si(CH₂)₃SH,
[(C₁₄H₂₉O-(CH₂-CH₂O)₂]2(MeO)Si(CH₂)₃SH,
   [(C₁₄H₂₉O-(CH₂-CH₂O)₃]₂(MeO)Si(CH₂)₃SH,
   [(C₁₄H₂₉O-(CH₂-CH₂O)₄]₂(MeO)Si(CH₂)₃SH,
   [(C₁₄H₂₉O-(CH₂-CH₂O)₅]₂(MeO)Si(CH₂)₃SH,
   [(C₁₄H₂₉O-(CH₂-CH₂O)₆]₂(MeO)Si(CH₂)₃SH,
(C₉H₁₉O-(CH₂-CH₂O)₂](EtO)₂Si(CH₂)₃SH,
   [(C₉H₁₉O-(CH₂-CH₂O)₃](EtO)₂Si(CH₂)₃SH,
   [(C₉H₁₉O-(CH₂-CH₂O)₄](EtO)₂Si(CH₂)₃SH,
   [(C₉H₁₉O-(CH₂-CH₂O)₅](EtO)₂Si(CH₂)₃SH,
   [(C₉H₁₉O-(CH₂-CH₂O)₆](EtO)₂Si(CH₂)₃SH,
[(C₁₂H₂₅O-(CH₂-CH₂O)₂](EtO)₂Si(CH₂)₃SH,
   [(C₁₂H₂₅O-(CH₂-CH₂O)₃](EtO)₂Si(CH₂)₃SH,
   [(C₁₂H₂₅O-(CH₂-CH₂O)₄](EtO)₂Si(CH₂)₃SH,
   [(C₁₂H₂₅O-(CH₂-CH₂O)₅](EtO)₂Si(CH₂)₃SH,
   [(C₁₂H₂₅O-(CH₂-CH₂O)₆](EtO)₂Si(CH₂)₃SH,
[(C₁₃H₂₇O-(CH₂-CH₂O)₂](EtO)₂Si(CH₂)₃SH,
   [(C₁₃H₂₇O-(CH₂-CH₂O)₃](EtO)₂Si(CH₂)₃SH,
   [(C₁₃H₂₇O-(CH₂-CH₂O)₄](EtO)₂Si(CH₂)₃SH,
   [(C₁₃H₂₇O-(CH₂-CH₂O)₅](EtO)₂Si(CH₂)₃SH,
   [(C₁₃H₂₇O-(CH₂-CH₂O)₆](EtO)₂Si(CH₂)₃SH,
[(C₁₄H₂₉O-(CH₂-CH₂O)₂](EtO)₂Si(CH₂)₃SH,
   [(C₁₄H₂₉O-(CH₂-CH₂O)₃](EtO)₂Si(CH₂)₃SH,
   [(C₁₄H₂₉O-(CH₂-CH₂O)₄](EtO)₂Si(CH₂)₃SH,
   [(C₁₄H₂₉O-(CH₂-CH₂O)₅](EtO)₂Si(CH₂)₃SH,
   [(C₁₄H₂₉O-(CH₂-CH₂O)₆](EtO)₂Si(CH₂)₃SH,
[(C₉H₁₉O-(CH₂-CH₂O)₂]₂(EtO)Si(CH₂)₃SH,
   [(C₉H₁₉O-(CH₂-CH₂O)₃]₂(EtO)Si(CH₂)₃SH,
   [(C₉H₁₉O-(CH₂-CH₂O)₄]₂(EtO)Si(CH₂)₃SH,
   [(C₉H₁₉O-(CH₂-CH₂O)₅]₂(EtO)Si(CH₂)₃SH,
   [(C₉H₁₉O-(CH₂-CH₂O)₆]₂(EtO)Si(CH₂)₃SH,
[(C₁₂H₂₅O-(CH₂-CH₂O)₂]₂(EtO)Si(CH₂)₃SH,
   [(C₁₂H₂₅O-(CH₂-CH₂0)₃]₂(EtO)Si(CH₂)₃SH,
   [(C₁₂H₂₅O-(CH₂-CH₂O)₄]₂(EtO)Si(CH₂)₃SH,
   ((C₁₂H₂₅O-(CH₂-CH₂O)₅]₂(EtO)Si(CH₂)₃SH,
   [(C₁₂H₂₅O-(CH₂-CH₂O)₆]₂(EtO)Si(CH₂)₃SH,
[(C₁₃H₂₇O-(CH₂-CH₂O)₂]₂(EtO)Si(CH₂)₃SH,
   [(C₁₃H₂₇O-(CH₂-CH₂O)₃]₂(EtO)Si(CH₂)₃SH,
   [(C₁₃H₂₇O-(CH₂-CH₂O)₄]₂(EtO)Si(CH₂)₃SH,
   [(C₁₃H₂₇O-(CH₂-CH₂O)₅]₂(EtO)Si(CH₂)₃SH,
   [(C₁₃H₂₇O-(CH₂-CH₂O)₆]₂(EtO)Si(CH₂)₃SH,
[(C₁₄H₂₉O-(CH₂-CH₂O)₂]₂(EtO)Si(CH₂)₃SH,
   [(C₁₄H₂₉O-(CH₂-CH₂O)₃]₂(EtO)Si(CH₂)₃SH,
   [(C₁₄H₂₉O-(CH₂-CH₂O)₄]₂(EtO)Si(CH₂)₃SH,
   (C₁₄H₂₉O-(CH₂-CH₂O)₅]₂(EtO)Si(CH₂)₃SH,
   [(C₁₄H₂₉O-(CH₂-CH₂O)₆]₂(EtO)Si(CH₂)₃SH,
[(C₉H₁₉O-(CH₂-CH₂O)₂]₃Si(CH₂)₃SH,
   [(C₉H₁₉O-(CH₂-CH₂O)₃]₃Si(CH₂)₃SH,
   [(C₉H₁₉O-(CH₂-CH₂O)₄]₃Si(CH₂)₃SH,
   [(C₉H₁₉O-(CH₂-CH₂O)₅]₃Si(CH₂)₃SH,
   [(C₉H₁₉O-(CH₂-CH₂O)₆]₃Si(CH₂)₃SH,
[(C₁₂H₂₅O-(CH₂-CH₂O)₂]₃Si(CH₂)₃SH,
   [(C₁₂H₂₅O-(CH₂-CH₂O)₃]₃Si(CH₂)₃SH
   [(C₁₂H₂₅O-(CH₂-CH₂O)₄]₃Si(CH₂)₃SH,
   [(C₁₂H₂₅O-(CH₂-CH₂O)₅]₃Si(CH₂)₃SH,
   [(C₁₂H₂₅O-(CH₂-CH₂O₆]₃Si(CH₂)₃SH,
[(C₁₃H₂₇O-(CH₂-CH₂O)₂]₃Si(CH₂)₃SH,
   [(C₁₃H₂₇O-(CH₂-CH₂O)₃]₃Si(CH₂)₃SH,
   [(C₁₃H₂₇O-(CH₂-CH₂O)₄]₃Si(CH₂)₃SH,
   [(C₁₃H₂₇O-(CH₂-CH₂O)₅]₃Si(CH₂)₃SH,
   [(C₁₃H₂₇O-(CH₂-CH₂O)₆]₃Si(CH₂)₃SH,
[(C₁₄H₂₉O-(CH₂-CH₂O)₂]₃Si(CH₂)₃SH,
   [(C₁₄H₂₉O-(CH₂-CH₂O)₃]₃Si(CH₂)₃SH,
   [(C₁₄H₂₉O-(CH₂-CH₂O)₄]₃Si(CH₂)₃SH,
   [(C₁₄H₂₉O-(CH₂-CH₂O)₅]₃Si(CH₂)₃SH,
   [(C₁₄H₂₉O-(CH₂-CH₂O)₆]₃Si(CH₂)₃SHoder
   HS-CH₂CH₂-CH₂-Si(OCH₂-CH₂-)₃N.

Das erfindungsgemäße Verfahren kann unter Hydrogenolyse-Bedingungen durchgeführt werden.

Die Hydrierung kann bei einem Wasserstoffdruck von 5 bis 250 bar, bevorzugt 10 bis 200 bar, besonders bevorzugt 10 bis 99 bar, ganz besonders bevorzugt 10 bis 75 bar, Überdruck durchgeführt werden.

Die Hydrierung kann bei einer Temperatur von 50 bis 250°C, bevorzugt 75 bis 199°C, besonders bevorzugt 100 bis 175°C, ganz besonders bevorzugt 110 bis 170°C, durchgeführt werden.

Die Reaktionszeit für die Hydrierung kann weniger als 300 Minuten, bevorzugt weniger als 270 Minuten, besonders bevorzugt weniger als 240 Minuten, ganz besonders bevorzugt weniger als 210 Minuten, sein.

Es können dem Reaktionsgemisch vor, während oder am Ende der Reaktion Additive zugesetzt werden.

Die Additive können eine Verlängerung der Standzeit der verwendeten Katalysatoren bewirken. Die Additive können eine einfachere oder verbesserte Handhabung der verwendeten Katalysatoren bewirken. Die Additive können die Wiederverwendbarkeit der verwendeten Katalysatoren erhöhen. Die Additive können die Wirtschaftlichkeit des Verfahrens verbessern.

Additive können schwefelorganische Verbindungen, Titanalkoxylate, Amine, organische bzw. anorganische Säuren oder Basen oder deren Gemische sein.

Additive können Carbonsäuren, DMSO, Monoalkylamine, Dialkylamine oder Trialkylamine sein. Additive können Ti(OC₄H₉)₄ oder Ti(OC₃H₇)₄ sein.

Der Übergangsmetallkatalysator kann ein Katalysator sein, dessen katalytisch aktive Komponente aus einem oder mehreren Metallen der Gruppe VIII besteht. Als katalytisch aktive Komponente kann Nickel, Cobalt, Rhodium, Ruthenium, Palladium, Iridium oder Platin eingesetzt werden.

Die katalytisch aktive Komponente kann zusätzlich dotiert sein bzw. zusätzliche Komponenten, wie beispielsweise Alkalimetalle, bevorzugt Li, Na, K oder Rb, Erdalkalimetalle, bevorzugt Be, Mg, Ca, Sr oder Ba, Elemente der 3. Hauptgruppe, bevorzugt B, Al, Ga oder In, Elemente der 4. Hauptgruppe, bevorzugt C, Si, Ge, Sn oder Pb, Elemente der 5. Hauptgruppe, bevorzugt N, P, As oder Sb, Elemente der 6. Hauptgruppe, bevorzugt O, S, Se oder Te, Elemente der 7. Hauptgruppe, bevorzugt F, Cl, Br oder I, Nebengruppenelemente, bevorzugt , Sc, Y, Ti, Zr, Hf, V, Nb, Ta, Cr, Mo, W, Mn, Re, Fe, Ru, Co, Rh, Ir, Ni, Pd, Pt, Cu, Ag, Au, Zn oder Cd, enthalten.
Bevorzugte Dotierungskomponente kann ein Hydrid, Oxid, Halogenid, beispielsweise Fluorid, Chlorid, Bromid oder Iodid, Sulfid oder Nitrid sein.

Die dotierten Übergangsmetallkatalysatoren können poröse Skelettkatalysatoren vom Raney-Typ sein, die mit Übergangsmetallen und/oder Übergangsmetallverbindungen, beispielsweise Molybdän, dotiert sind.

Die dotierten Übergangsmetallkatalysatoren können poröse, aktivierte Metallkatalysatoren vom Raney-Typ sein, die mit Übergangsmetallen und/oder Übergangsmetallverbindungen, beispielsweise Molybdän, dotiert sind. Die dotierten Übergangsmetallkatalysatoren können bevorzugt aktivierte Nickelmetallkatalysatoren vom Raney-Typ sein, die mit Übergangsmetallen und/oder Übergangsmetallverbindungen, beispielsweise Molybdän, dotiert sind.

Der Gewichtsanteil der Dotierungskomponente (elementar oder als chemische Verbindung vorliegend) kann, bezogen auf das Gewicht des dotierten Übergangsmetallkatalysators, 0,00001 bis 80 Gew.-%, bevorzugt 0,0001 bis 50 Gew.-%, besonders bevorzugt 0,001 bis 15 Gew.-%, ganz besonders bevorzugt 0,01 bis 7,5 Gew.-%, betragen.

Die katalytisch aktive Komponente kann aus einem feinverteilten, ungeträgerten, aktivierten Metall bestehen. Das aktivierte, ungeträgerte Metall kann als Feststoff, in Suspension oder eingebettet in Wachse oder Öle eingesetzt werden.

Die katalytisch aktive Komponente kann auf einem der bekannten und üblichen Katalysator-Trägermaterialien, wie beispielsweise Diatomeenerde, Kohlenstoff, Kieselsäure, Aktivkohlen, Kieselguhr, Tonerde oder Alumosilicat, aufgebracht sein.

Die Katalysatorkonzentration bezogen auf das katalytisch aktive Metall kann 0,0001 bis 1 mmol pro 1 g Bis(alkoxysilylorganyl)polysulfid betragen.

Vorzugsweise kann für Cobalt als aktives Metall die Katalysatorkonzentration bezogen auf das katalytisch aktive Metall von 0,001 bis 1 mmol, besonders bevorzugt 0,008 bis 0,5 mmol, ganz besonders bevorzugt 0,01 bis 0,1 mmol, pro 1 g Bis(alkoxysilylorganyl)polysulfid betragen.

Vorzugsweise kann für Nickel als aktives Metall die Katalysatorkonzentration bezogen auf das katalytisch aktive Metall von 0,001 bis 1 mmol, besonders bevorzugt 0,01 bis 1 mmol, ganz besonders bevorzugt 0,1 bis 0,9 mmol, pro 1 g Bis(alkoxysilylorganyl)polysulfid betragen.

Vorzugsweise kann für Ruthenium als aktives Metall die Katalysatorkonzentration bezogen auf das katalytisch aktive Metall von 0,001 bis 1 mmol, besonders bevorzugt 0,005 bis 0,5 mmol, ganz besonders bevorzugt 0,005 bis 0,1 mmol, pro 1 g Bis(alkoxysilylorganyl)polysulfid betragen.

Vorzugsweise kann für Rhodium als aktives Metall die Katalysatorkonzentration bezogen auf das katalytisch aktive Metall von 0,001 bis 1 mmol, besonders bevorzugt 0,005 bis 0,5 mmol, ganz besonders bevorzugt 0,005 bis 0,1 mmol, pro 1 g Bis(alkoxysilylorganyl)polysulfid betragen.

Vorzugsweise kann für Palladium als aktives Metall die Katalysatorkonzentration bezogen auf das katalytisch aktive Metall von 0,001 bis 1 mmol, besonders bevorzugt 0,005 bis 1 mmol, ganz besonders bevorzugt 0,05 bis 1 mmol, pro 1 g Bis(alkoxysilylorganyl)polysulfid betragen.

Vorzugsweise kann für Iridium als aktives Metall die Katalysatorkonzentration bezogen auf das katalytisch aktive Metall von 0,001 bis 1 mmol, besonders bevorzugt 0,005 bis 0,5 mmol, ganz besonders bevorzugt 0,005 bis 0,1 mmol, pro 1 g Bis(alkoxysilylorganyl)polysulfid betragen.

Vorzugsweise kann für Platin als aktives Metall die Katalysatorkonzentration bezogen auf das katalytisch aktive Metall von 0,001 bis 1 mmol, besonders bevorzugt 0,005 bis 0,5 mmol, ganz besonders bevorzugt 0,005 bis 0,1 mmol, pro 1 g Bis(alkoxysilylorganyl)polysulfid betragen.

Als Parameter für den Vergleich der Geschwindigkeit der Hydrogenolyse bei einer gegebenen Temperatur T und einem konstanten Druck p kann der durch die Beziehung "Umsatz an Edukt" pro "mmol Katalysatormetall" pro "Minute" quantitativ ausdrückbare Umsatz dienen.
Kann der Umsatz bei niedrigeren Temperaturen gesteigert werden, stellt das in ökologischer, energetischer und wirtschaftlicher Hinsicht eine wesentliche Verbesserung dar. Die Energieeffizienz des Verfahrens nimmt bei verminderten Temperaturen zu, die Raum-Zeit-Ausbeute steigt mit dem Umsatz und häufig ergibt sich bei verminderten Temperaturen oder Drücken auch eine vereinfachte Handhabung der eingesetzten und erhaltenen Stoffe. Die Belastung der technischen Anlage nimmt bei niedrigeren Temperaturen und Drücken ab.

Der Umsatz kann 0,001 bis 10 g Bis(alkoxysilylorganyl)polysulfid pro 1 mmol katalytisch aktives Metall pro Minute betragen.

Vorzugsweise kann für Cobalt als aktives Metall der Umsatz 0,001 bis 10 g, besonders bevorzugt 0,01 bis 10 g, ganz besonders bevorzugt 0,1 bis 5 g, Bis(alkoxysilylorganyl)polysulfid pro 1 mmol katalytisch aktives Metall pro Minute betragen.

Vorzugsweise kann für Nickel als aktives Metall der Umsatz 0,001 bis 10 g, besonders bevorzugt 0,01 bis 10 g, ganz besonders bevorzugt 0,1 bis 5 g, Bis(alkoxysilylorganyl)polysulfid pro 1 mmol katalytisch aktives Metall pro Minute betragen.

Vorzugsweise kann für Ruthenium als aktives Metall der Umsatz 0,001 bis 10 g, besonders bevorzugt 0,01 bis 5 g, ganz besonders bevorzugt 0,1 bis 3 g, Bis(alkoxysilylorganyl)polysulfid pro 1 mmol katalytisch aktives Metall pro Minute betragen.

Vorzugsweise kann für Rhodium als aktives Metall der Umsatz 0,001 bis 10 g, besonders bevorzugt 0,01 bis 5 g, ganz besonders bevorzugt 0,1 bis 3 g, Bis(alkoxysilylorganyl)polysulfid pro 1 mmol katalytisch aktives Metall pro Minute betragen.

Vorzugsweise kann für Palladium als aktives Metall der Umsatz 0,001 bis 10 g, besonders bevorzugt 0,01 bis 5 g, ganz besonders bevorzugt 0,1 bis 3 g, Bis(alkoxysilylorganyl)polysulfid pro 1 mmol katalytisch aktives Metall pro Minute betragen.

Vorzugsweise kann für Iridium als aktives Metall der Umsatz 0,01 bis 10 g, besonders bevorzugt 0,1 bis 5 g, ganz besonders bevorzugt 0,15 bis 3 g, Bis(alkoxysilylorganyl)polysulfid pro 1 mmol katalytisch aktives Metall pro Minute betragen.

Vorzugsweise kann für Platin als aktives Metall der Umsatz 0,01 bis 10 g, besonders bevorzugt 0,1 bis 5 g, ganz besonders bevorzugt 0,5 bis 5 g, Bis(alkoxysilylorganyl)polysulfid pro 1 mmol katalytisch aktives Metall pro Minute betragen.

Als Parameter für den Vergleich der Geschwindigkeit der Hydrogenolyse bei einer gegebenen Temperatur T und einem konstanten Druck p kann der durch die Beziehung "gebildetes Produkt in mmol" pro "katalytisch aktivem Metall" pro "Minute" quantitativ ausdrückbare molare Umsatz dienen.

Der molare Umsatz kann 0,001 bis 50 mmol Mercaptoorganyl-(alkoxysilan) pro 1 mmol katalytisch aktivem Metall pro Minute betragen.

Vorzugsweise kann für Eisen, Nickel, Cobalt, Ruthenium, Rhodium, Platin, Iridium oder Palladium enthaltende Übergangsmetallkatalysatoren der molare Umsatz 0,001 bis 50 mmol, bevorzugt 0,01 bis 40 mmol, besonders bevorzugt 0,05 bis 30 mmol, ganz besonders bevorzugt 0,1 bis 20 mmol, Mercaptoorganyl(alkoxysilan) pro 1 mmol enthaltenes Übergangsmetall der Gruppe VIII pro Minute betragen.

Mit dem erfindungsgemäßen Verfahren können mehr als 90 Gewichtsprozent, bevorzugt mehr als 92 Gewichtsprozent, besonders bevorzugt mehr als 94 Gewichtsprozent, ganz besonders bevorzugt mehr als 96 Gewichtsprozent, des eingesetzten Bis(alkoxysilylorganyl)polysulfids in ein Mercaptoorganyl(alkoxysilan) umgesetzt werden.

Mit dem erfindungsgemäßen Verfahren kann der relative Anteil (mol%) des enthaltenen Bis(alkoxysilylorganyl)monosulfids konstant bleiben.

Mit dem erfindungsgemäßen Verfahren kann der relative Anteil (mol%) des enthaltenen Bis(alkoxysilylorganyl)monosulfids zunehmen.

Mit dem erfindungsgemäßen Verfahren kann der relative Anteil (mol%) des enthaltenen Bis(alkoxysilylorganyl)monosulfids abnehmen.

Bei dem erfindungsgemäßen Verfahren kann der relative Anteil des im Edukt enthaltenen
Bis(alkoxysilylorganyl)monosulfids <10 Gew.-%, vorzugsweise <8 Gew.-%, besonders bevorzugt <6-Gew.%, ganz besonders bevorzugt <4-Gew.% , sein.

Bei dem erfindungsgemäßen Verfahren kann es sich um ein Batchverfahren oder um ein kontinuierliches Verfahren handeln.

Bei dem Batchverfahren kann es sich um ein Slurry-Verfahren oder Suspensionsverfahren, zum Beispiel in Rührautoklaven oder Buss-Reaktoren, handeln.

Bei den kontinuierlichen Verfahren kann es sich um ein Slurry-Verfahren mit kontinuierlicher Flüssigkeits- und Gaszufuhr handeln.

Bei dem kontinuierlichen Verfahren können bekannte Reaktoren für Gas/Flüssig/Fest-Reaktionen zum Einsatz kommen. Typische Vertreter für Festbettreaktoren können sein der Riesel- und Sumpfreaktor, für Suspensionsreaktoren der Rührkessel, die Blasensäule und das Fließbett.

Das erfindungsgemäße Verfahren hat den Vorteil , dass die Hydrogenolyse der Polysulfide auch ohne Einsatz von hochgiftigem H₂S oder Alkoholen bei milderen Bedingungen, als durch den Stand der Technik beschrieben, erfolgreich durchgeführt werden kann. Eine negative Beeinträchtigung der Hydrierung durch den Verzicht auf spezielle Entgiftungsreagenzien läßt sich nicht feststellen.

Mit dem erfindungsgemäßen Verfahren kann für die Spaltung von Bis (alkoxysilylorganyl)polysulfiden durch H₂ mit den verwendeten Katalysatoren eine zufriedenstellende Aktivität erreicht werden.

Bei dem erfindungsgemäßen Verfahren kann auf die Verwendung von Entgiftungsreagenzien verzichtet werden.

Es können im Vergleich zum Stand der Technik der entgiftungsreagentienfreien Hydrierung von Bis(alkoxysilylorganyl)polysulfiden in Substanz für Ruthenium beispielsweise doppelt so hohe Umsätze erhalten werden. Diese höheren Umsätze können schon bei milderen Reaktionsbedingungen bezüglich Temperatur und Druck als bisher im Stand der Technik für entgiftungsreagentienfreie Polysulfansilansysteme beschrieben, erhalten werden. Durch einen höheren Umsatz wird nicht nur die Raum-Zeit-Ausbeute erheblich verbessert, sondern auch der spezifische Energieverbrauch für die Herstellung von Mercaptoorganyl(alkoxysilanen) durch reduktive Spaltung mit H₂ aus Bis(alkoxysilylorganyl)polysulfiden verringert. Durch einen geringeren Energieverbrauch und mildere Reaktionsbedingungen wird die Anlage weniger beansprucht, es resultiert unter anderem ein geringerer Verschleiß. Durch einen geringeren Energieverbrauch bei der Herstellung von Mercaptoorganyl(alkoxysilanen) wird die Energiebilanz des Prozesses verbessert und die Umwelt geringer belastet.

### Beispiele:

In Tabelle 1 sind die Vergleichsbeispiele aus US 6,433,206 zusammengefaßt. Als Polysulfansilan wird ein nicht näher spezifiziertes Disulfansilan-Gemisch, daß hauptsächlich Bis(3-triethoxysilylpropyl)disulfid enthält, eingesetzt.

Über Bildung von Nebenprodukten wird nicht beschrieben. Die Produktanalytik erfolgt mit nicht näher beschriebenen gaschromatographischen Methoden.

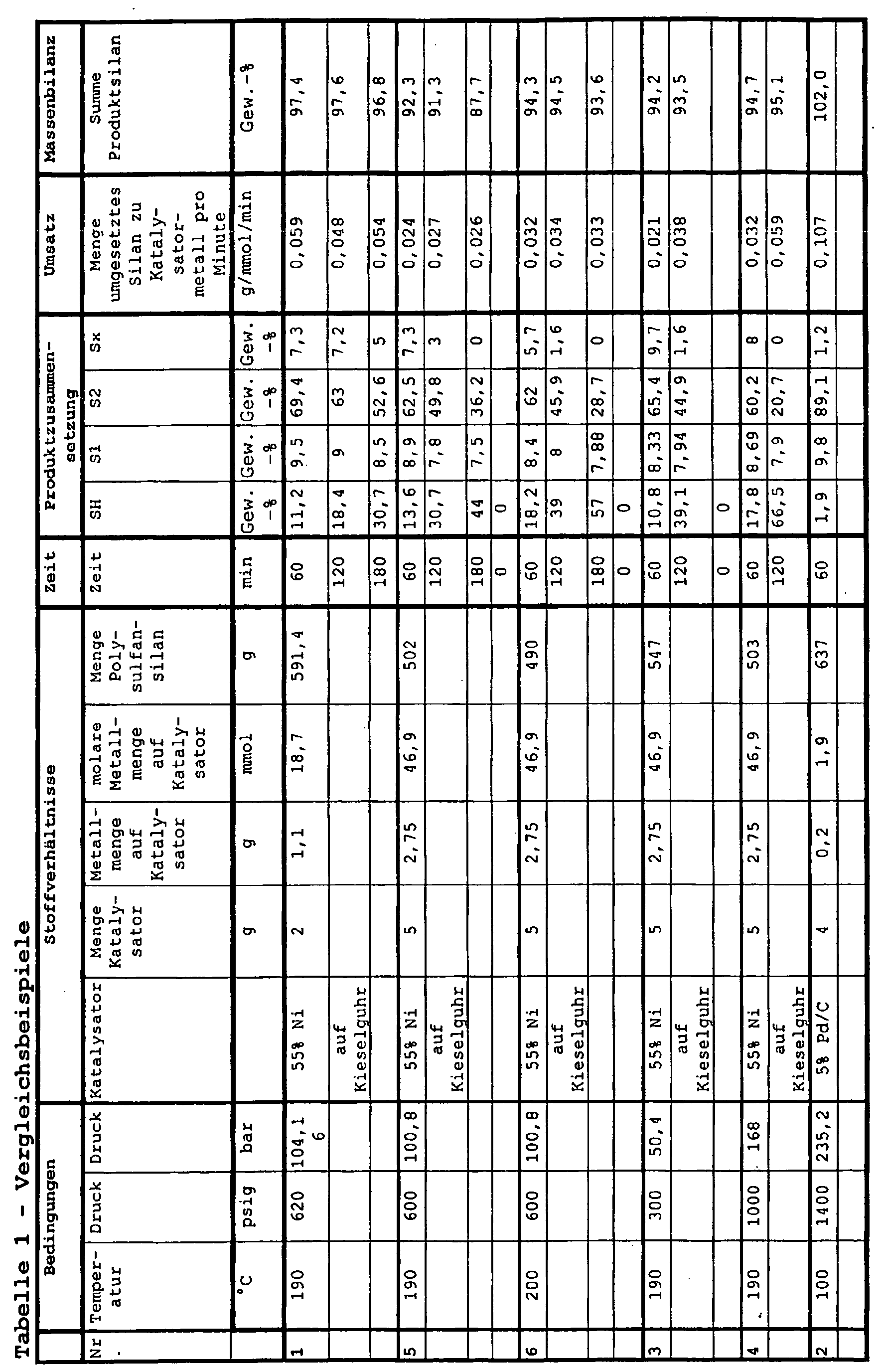

In der Tabelle 2, 3 und 4 sind die erfindungsgemäßen Beispiele auf Basis eines Disulfansilans zusammengefaßt. In einer Apparatur der Firma Chemscan, die aus 8 parallel mittels Ölbad beheizte Autoklaven besteht, deren Reaktorvolumina 20 ml betragen und die mit ankerförmigen Magnetrührern, die auf einer in der Reaktormitte befindlichen feststehenden Welle mit 1300 U/min rotieren, ausgestattet sind, wird gemäß den Bedingungen in Tabelle 2, 3 und 4 Si 266 (Handelsprodukt der Degussa AG /[Bis(alkoxysilylorganyl)disulfid]) katalytisch hydriert.

Die Reaktion wird nach den angegebenen Zeiten beendet.

In den Spalten "Produktzusammensetzung" in Tabelle 2,3 und 4 werden nur die Komponenten
Mercaptopropyl(triethoxysilan),
Bis(triethoxysilylpropyl)disulfid,
Bis(triethoxysilylpropyl)trisulfid und
Bis(triethoxysilylpropyl)tetrasulfid berücksichtigt.
Bis(triethoxysilylpropyl)monosulfid und 3-Chlorpropyl(triethoxysilan) werden vernachlässigt.

Die Produktzusammensetzung wird mittels ¹H-NMR ermittelt.

Das für die Versuche verwendete Si 266 enthält laut kombinierten GC/HPLC und NMR-Analysen 1,7 Gew.-% Bis(triethoxysilylpropyl)monosulfid,
84 Gew.-% Bis(triethoxysilylpropyl)disulfid,
12 Gew.-% Bis(triethoxysilylpropyl)trisulfid und
1 Gew.-% Bis(triethoxysilylpropyl)tetrasulfid.

Die ermittelte durchschnittliche Kettenlänge der Polysulfanmischung beträgt ca. 2,14 (berücksichtigt wird nur der Mittelwert von S2-S8). Im verwendeten Si 266 sind 0,8 Gew.-% 3-Chlorpropyl(triethoxysilan) enthalten.

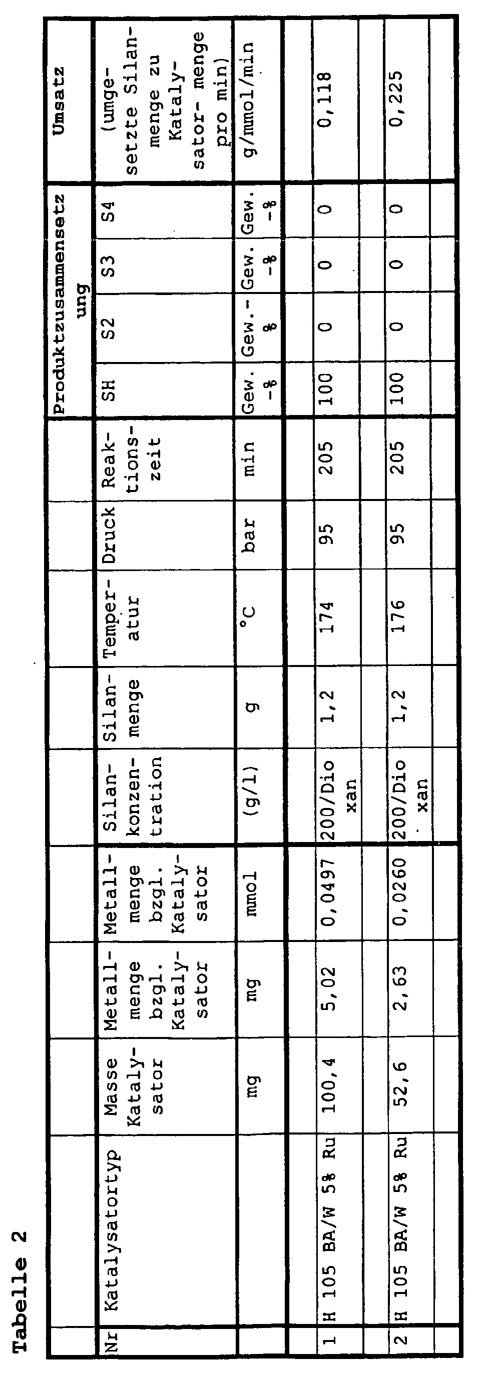

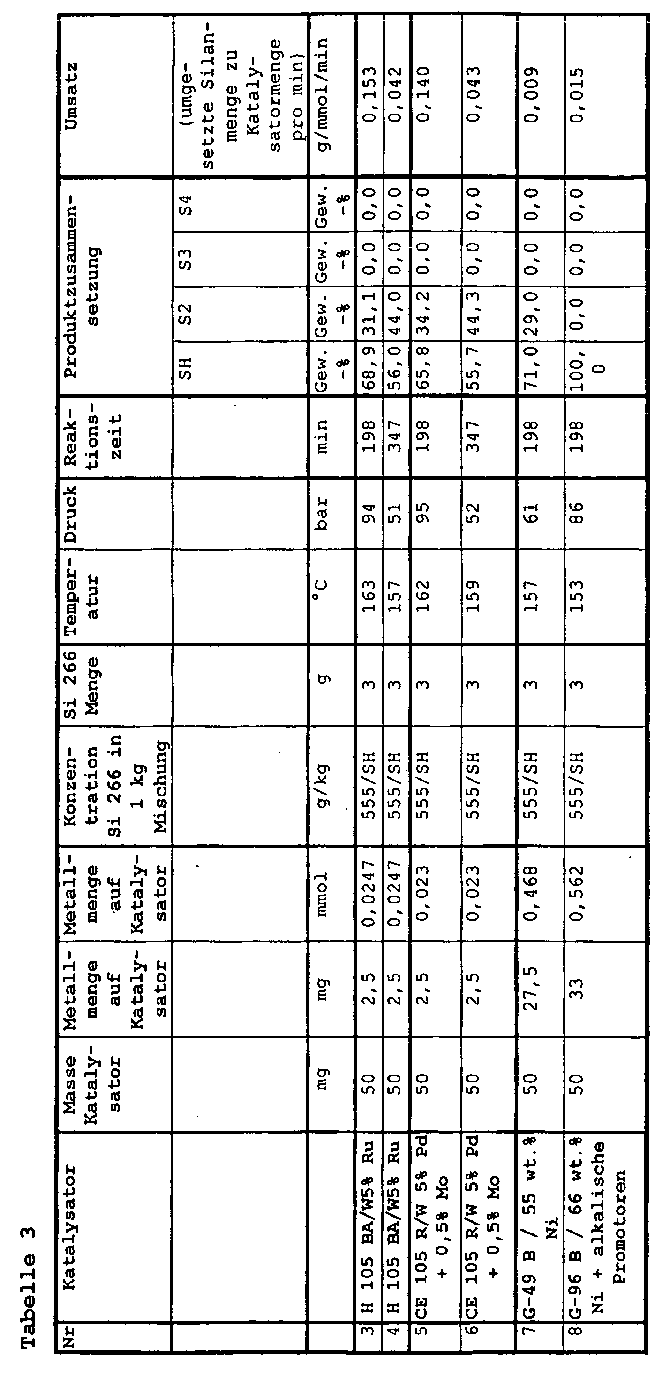

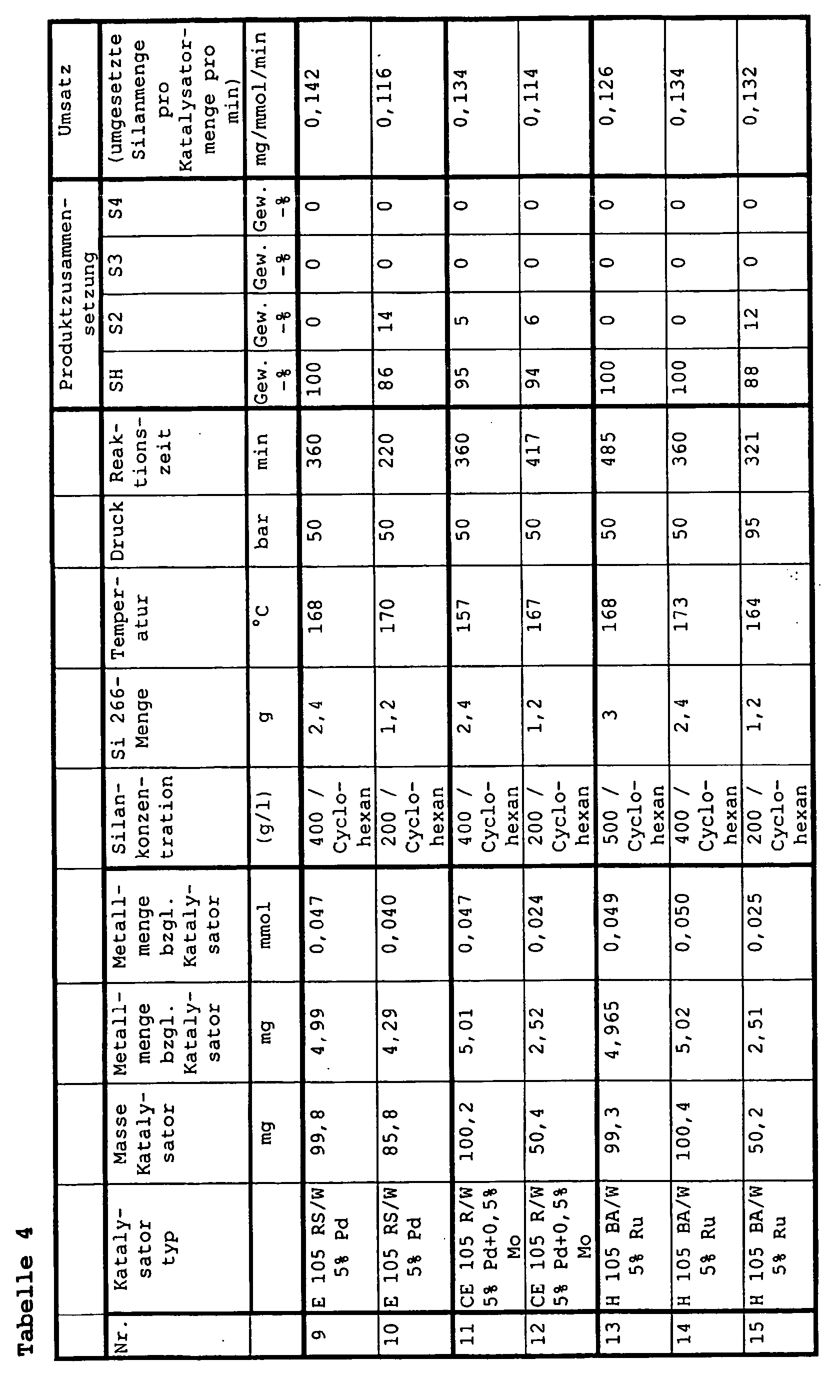

In der Tabelle 5 sind die erfindungsgemäßen Beispiele auf Basis eines Tetrasulfansilans zusammengefaßt. In einer Apparatur der Fa. Chemscan, die aus 8 parallel mittels Ölbad beheizte Autoklaven besteht, deren Reaktorvolumina 20 ml betragen und die mit ankerförmigen Magnetrührern, die auf einer in der Reaktormitte befindlichen feststehenden Welle mit 1300 U/min rotieren, ausgestattet sind, wird gemäß den Bedingungen in Tabelle 5 Si 69 (Handelsprodukt der Degussa AG /[Bis(alkoxysilylorganyl)tetrasulfid]) katalytisch hydriert.

Die Reaktion wird nach den angegebenen Zeiten beendet.

In den Spalten "Produktzusammensetzung" in Tabelle 5 werden nur die Komponenten
Mercaptopropyl (triethoxysilan),
Bis (triethoxysilylpropyl) disulfid,
Bis(triethoxysilylpropyl)trisulfid und
Bis(triethoxysilylpropyl)tetrasulfid berücksichtigt.
Bis(triethoxysilylpropyl)monosulfid und 3-Chlorpropyl(triethoxysilan) werden vernachlässigt.

Die angegebene Produktzusammensetzung wird mittels ¹H-NMR ermittelt.

Das für die Versuche verwendete Si 69 enthält laut kombinierten GC/HPLC und NMR-Analysen
0,1 Gew.-% Bis(triethoxysilylpropyl)monosulfid,
17 Gew.-% Bis(triethoxysilylpropyl)disulfid,
27 Gew.-% Bis(triethoxysilylpropyl)trisulfid,
25 Gew.-% Bis(triethoxysilylpropyl)tetrasulfid und
ca. 29 Gew.-% Bis(triethoxysilylpropyl)polysulfid mit Sx- x≥5.

Die ermittelte durchschnittliche Kettenlänge der Polysulfanmischung beträgt 3,75. Es sind im Si 69 1,4 Gew.-% 3-Chlorpropyl(triethoxysilan) enthalten.

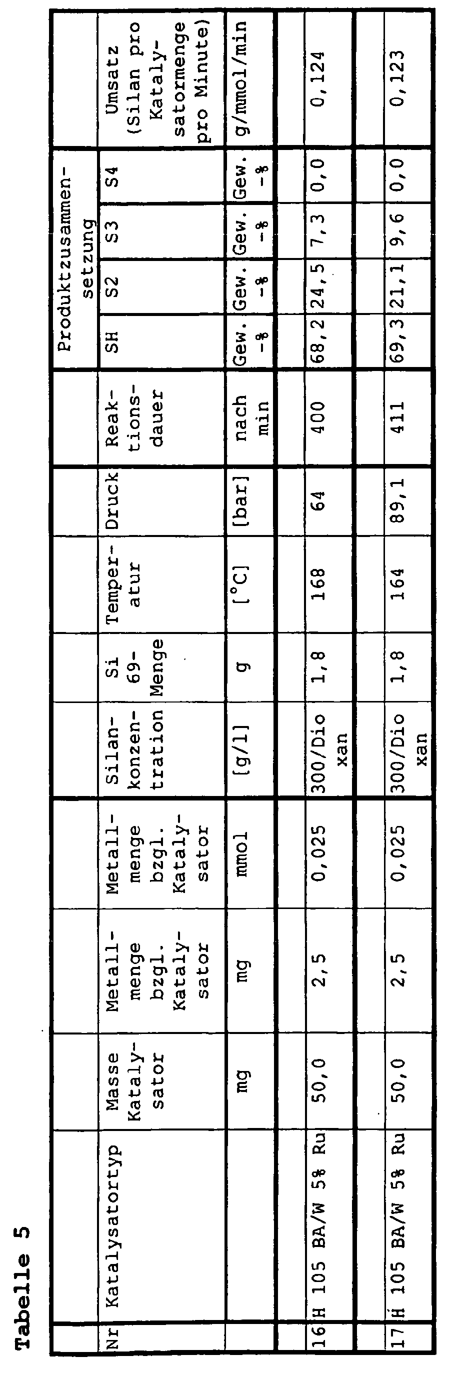

Die in den Tabellen enthaltenen Abkürzungen bedeuten:
SH = 3-Mercaptopropyl(triethoxysilan),
S2 = Bis(triethoxysilylpropyl)disulfid,
S3 = Bis(triethoxysilylpropyl)trisulfid,
S4 = Bis(triethoxysilylpropyl)tetrasulfid.

Si 69 [Bis(alkoxysilylorganyl)tetrasulfid] und Si 266 [Bis(alkoxysilylorganyl)disulfid] sind handelsübliche Bis (alkoxysilyorganyl)polysulfide der Degussa AG.

Bei den Katalysatoren mit den Kurzbezeichnungen H 105 BA/W 5% Ru, E 105 RS/W 5% Pd, CE 105 R/W 5% Pd + 0,5% Mo und E 105 Y/W 5% Pd handelt es sich um Edelmetallpulverkatalysatoren, die durch Aufbringung einer Edelmetallkomponente wie Ruthenium oder Palladium auf einem porösen, hochoberflächigen Trägermaterial hergestellt werden. Der Anteil der Edelemetallkomponente beträgt dabei 5 Gew.-% bezogen auf die Trockenmasse des Katalysators. Die Katalysatoren werden als pulverförmige, rieselfähige Feststoffe eingesetzt. Die genannten Katalysatoren sind auf Aktivkohlen geträgert.

Bei dem Katalysator mit der Kurzbezeichnung B 111 W handelte es sich um einen aktivierten Metall-Katalysator, der durch Suspendierung von feinverteiltem elementarem Nickel in wässriger Lösung hergestellt wird. Der Katalysator wird nach Abtrennung der Metallkomponente als pulverförmiger Feststoff eingesetzt.

Die Katalysatoren mit den Kurzbezeichnungen enthalten folgende Mengen an aktivem Metall: H 105 BA/W 5% Ru, E 105 RS/W 5% Pd, CE 105 R/W 5% Pd + 0,5% Mo, E 105 Y/W 5% Pd, sowie B 111 W 100% Ni.Die Katalysatoren G-96 B und T 8027 sind Handelsprodukte der Süd-Chemie AG. Der Katalysator G-96 B enthält 66% Nickel und alkalische Promotoren.

Der Katalysator T 8027 enthält 52% Nickel und 2,4% Zirkonium.

Für die Analyse der Produkte wird unter anderem ein DRX 500 NMR-Gerät der Firma Bruker gemäß den dem Fachmann bekannten Regeln und Bedienvorschriften verwendet. Die Messfrequenzen sind 99,35 MHz für ²⁹Si-Kerne und 500,13 MHz für ¹H-Kerne. Als Referenz dient Tetramethylsilan (TMS).

Die Analyse von Bis(alkoxysilylorganyl)polysulfiden und Mercaptoorganyl(alkoxysilanen) und deren Gemischen kann mit GC, HPLC und NMR erfolgen (U. Görl, J. Münzenberg, D. Luginsland, A. Müller Kautschuk Gummi Kunststoffe 1999, 52(9), 588, D. Luginsland Kautschuk Gummi Kunststoffe 2000, 53(1-2), 10, M. W. Backer et al, Polmer Preprints 2003, 44(1), 245).

Bei dem erfindungsgemäßen Verfahren kann auf die Verwendung von Entgiftungsreagenzien verzichtet werden.

Es können im Vergleich zum Stand der Technik der entgiftungsreagentienfreien Hydrierung von Bis(alkoxysilylorganyl)polysulfiden in Substanz für Ruthenium doppelt so hohe Umsätze erhalten werden.

## Patentansprüche

1. Verfahren zur Herstellung von Mercaptoorganyl(alkoxysilanen), **dadurch gekennzeichnet, daß** man Bis(alkoxysilylorganyl) polysulfide in einem Lösungsmittel mit Wasserstoff und einem Übergangsmetallkatalysator ohne Zusatz von Alkoholen, H₂S oder Wasser hydriert.

2. Verfahren zur Herstellung von Mercaptoorganyl(alkoxysilanen) nach Anspruch 1, **dadurch gekennzeichnet, daß** das Bis(alkoxysilylorganyl)polysulfid eine Verbindung der allgemeinen Formel (I)
Z-A-Sₓ-A-Z (I)
ist, wobei
x eine Zahl von 1 bis 14
Z gleich oder verschieden SiX¹X²X³ oder Si (OCH₂-CH₂-) ₃N ist,
X¹, X², X³ jeweils unabhängig voneinander bedeuten können Hydroxy (-OH),
eine lineare oder verzweigte oder ringförmige Kohlenwasserstoffkette mit 1-18 Kohlenstoffatomen (C1-C18), ein Alkylsäure- (CₓH₂ₓ₊₁)-C(=O)O-, Alkenylsäuresubstituent, ein substituierter Alkyl-, beziehungsweise Alkenylsäuresubstituent, ein Cycloalkanrest mit 5-12 Kohlenstoffatomen,
ein Benzylrest, ein halogen- oder alkylsubstituierter Phenylrest,
Alkoxygruppen mit (C1-C24) Alkoxy, mit linearen oder verzweigten Kohlenwasserstoffketten,
eine Cycloalkoxygruppe mit (C5-12)-Atomen,
eine halogen- oder alkylsubstituierte Phenoxygruppe, eine Benzyloxygruppe,
eine Alkylethergruppe O-(CR^{I}₂-CR^{I}₂)-O-Alk oder
eine Alkylpolyethergruppe O-(CR^{I}₂-CR^{I}₂O)ₐ-Alk, mit a = 2-25, R^{I} unabhängig voneinander H oder
Alkylgruppe, Alk eine lineare oder verzweigte, gesättigte oder ungesättigte Alkylkette mit 1-30 Kohlenstoffatomen (C1-C30),
A eine lineare oder verzweigte, gesättigte oder ungesättigte aliphatische, aromatische oder gemischt aliphatische/aromatische zweibindige C1-C30 umfassende Kohlenwasserstoffkette ist.

3. Verfahren zur Herstellung von Mercaptoorganyl (alkoxysilanen) nach Anspruch 1, **dadurch gekennzeichnet, daß** die
Bis (alkoxysilylorganyl)polysulfide Mischungen von Verbindungen der allgemeinen Formel 1 sind.

4. Verfahren zur Herstellung von Mercaptoorganyl (alkoxysilanen) nach Anspruch 1, **dadurch gekennzeichnet, daß** man das zu hydrierende Bis(alkoxysilylorganyl)polysulfid mit einem polaren oder unpolaren, protischen oder aprotischen Stoff mischt.

5. Verfahren zur Herstellung von Mercaptoorganyl (alkoxysilanen) nach Anspruch 1, **dadurch gekennzeichnet, daß** man die Hydrierung bei einem Druck von 10 bis 250 bar durchführt.

6. Verfahren zur Herstellung von Mercaptoorganyl(alkoxysilanen) nach Anspruch 1, **dadurch gekennzeichnet, daß** man die Hydrierung bei einer Temperatur von 50 bis 250°C durchführt.

7. Verfahren zur Herstellung von Mercaptoorganyl(alkoxysilanen) nach Anspruch 1, **dadurch gekennzeichnet, daß** der Katalysator als katalytisch aktive Komponente Nickel, Cobalt, Rhodium, Ruthenium, Palladium, Iridium oder Platin enthält.

8. Verfahren zur Herstellung von Mercaptoorganyl (alkoxysilanen) nach Anspruch 1, **dadurch gekennzeichnet, daß** die katalytisch aktive Komponente zusätzlich dotiert ist bzw. zusätzliche Komponenten enthält.

9. Verfahren zur Herstellung von
Mercaptoorganyl (alkoxysilanen) nach Anspruch 8, **dadurch gekennzeichnet, daß** die katalytisch aktive Komponente ein oder mehrere Alkalimetalle, Erdalkalimetalle, Elemente der 3. Hauptgruppe, Elemente der 4. Hauptgruppe, Elemente der 5. Hauptgruppe, Elemente der 6. Hauptgruppe, Elemente der 7. Hauptgruppe oder Nebengruppenelemente enthält.

10. Verfahren zur Herstellung von Mercaptoorganyl (alkoxysilanen) nach Anspruch 1, **dadurch gekennzeichnet, daß** die Katalysatorkonzentration, bezogen auf das katalytisch aktive Metall 0,0001 bis 1 mmol pro 1 g Bis(alkoxysilylorganyl)polysulfid beträgt.

11. Verfahren zur Herstellung von Mercaptoorganyl (alkoxysilanen) nach Anspruch 1, **dadurch gekennzeichnet, daß** man das Verfahren batchweise durchführt.

12. Verfahren zur Herstellung von Mercaptoorganyl (alkoxysilanen) nach Anspruch 1, **dadurch gekennzeichnet, daß** man es kontinuierlich durchführt.

13. Verfahren zur Herstellung von Mercaptoorganyl (alkoxysilanen) nach Anspruch 1, **dadurch gekennzeichnet, daß** die Reaktionsmischung Additive enthält.

## Claims

1. Process for the preparation of mercaptoorganyl(alkoxysilanes), **characterized in that** bis(alkoxysilylorganyl)polysulfides are hydrogenated with hydrogen and a transition metal catalyst in a solvent without the addition of alcohols, H₂S or water.

2. Process for the preparation of mercaptoorganyl(alkoxysilanes) according to Claim 1, **characterized in that** the bis(alkoxysilylorganyl)polysulfide is a compound of the general formula (I)
Z-A-Sₓ-A-Z (I)
wherein
x is a number from 1 to 14
Z is identical or different and is SiX¹X²X³ or Si(OCH₂-CH₂-)₃N,
X¹, X² X³ in each case independently of one another can denote hydroxyl (-OH),
a linear or branched or cyclic hydrocarbon chain having 1-18 carbon atoms (C1-C18), an alkyl acid (CₓH₂ₓ₊₁)-C(=O)O- or alkenyl acid substituent, a substituted alkyl or alkenyl acid substituent, a cycloalkane radical having 5-12 carbon atoms, a benzyl radical, a halogen- or alkyl-substituted phenyl radical, alkoxy groups with (C1-C24) alkoxy, having linear or branched hydrocarbon chains, a cycloalkoxy group having (C5-12) atoms, a halogen- or alkyl-substituted phenoxy group, a benzyloxy group,
an alkyl ether group O-(CR^{I}₂-CR^{I}₂)-O-Alk or an alkyl polyether group O-(CR^{I}₂-CR^{I}₂O)ₐ-Alk, where a=2-25, R^{I}, independently of one another, is H or an alkyl group, Alk is a linear or branched, saturated or unsaturated alkyl chain having 1-30 carbon atoms (C1-C30),
A is a linear or branched, saturated or unsaturated, aliphatic, aromatic or mixed aliphatic/aromatic divalent hydrocarbon chain comprising C1-C30.

3. Process for the preparation of mercaptoorganyl(alkoxysilanes) according to claim 1, **characterized in that** the bis(alkoxysilylorganyl)polysulfides are mixtures of compounds of the general formula (I).

4. Process for the preparation of mercaptoorganyl(alkoxysilanes) according to claim 1, **characterized in that** the bis(alkoxysilylorganyl)polysulfide to be hydrogenated is mixed with a polar or non-polar, protic or aprotic substance.

5. Process for the preparation of mercaptoorganyl(alkoxysilanes) according to claim 1, **characterized in that** the hydrogenation is carried out under a pressure of from 10 to 250 bar.

6. Process for the preparation of mercaptoorganyl(alkoxysilanes) according to claim 1, **characterized in that** the hydrogenation is carried out at a temperature of from 50 to 250°C.

7. Process for the preparation of mercaptoorganyl(alkoxysilanes) according to claim 1, **characterized in that** the catalyst contains nickel, cobalt, rhodium, ruthenium, palladium, iridium or platinum as the catalytically active component.

8. Process for the preparation of mercaptoorganyl(alkoxysilanes) according to claim 1, **characterized in that** the catalytically active component is additionally doped or contains additional components.

9. Process for the preparation of mercaptoorganyl(alkoxysilanes) according to claim 8, **characterized in that** the catalytically active component comprises one or more alkali metals, alkaline earth metals, elements of main group 3, elements of main group 4, elements of main group 5, elements of main group 6, elements of main group 7 or subgroup elements.

10. Process for the preparation of mercaptoorganyl(alkoxysilanes) according to claim 1, **characterized in that** the catalyst concentration, based on the catalytically active metal, is 0.0001 to 1 mmol per 1 g of bis(alkoxysilylorganyl)polysulfide.

11. Process for the preparation of mercaptoorganyl(alkoxysilanes) according to claim 1, **characterized in that** the process is carried out batchwise.

12. Process for the preparation of mercaptoorganyl(alkoxysilanes) according to claim 1, **characterized in that** it is carried out continuously.

13. Process for the preparation of mercaptoorganyl(alkoxysilanes) according to claim 1, **characterized in that** the reaction mixture contains additives.

## Revendications

1. Procédé pour la préparation de mercaptoorganyl(alcoxysilanes), **caractérisé en ce qu'**on hydrogène des bis(alcoxysilylorganyl)polysulfures dans un solvant avec de l'hydrogène et un catalyseur à base d'un métal de transition sans addition d'alcools, de H₂S ou d'eau.

2. Procédé pour la préparation de mercaptoorganyl(alcoxysilanes) selon la revendication 1, **caractérisé en ce que** le bis(alcoxysilylorganyl)polysulfure est un composé de formule générale (I)
Z-A-Sₓ-A-Z (I)
dans laquelle
x représente un nombre de 1 à 14
Z est identique ou différent et représente SiX¹X²X³ ou Si(OCH₂-CH₂-)₃N,
X¹, X² , X³, à chaque fois indépendamment l'un de l'autre, peut signifier hydroxy (-OH),
une chaîne hydrocarbonée linéaire ou ramifiée ou cyclique comprenant 1-18 atomes de carbone (C1-C18), un substituant alkylacide (CₓH₂ₓ₊ᵢ)-C(=O)O-, un substituant alcénylacide, un substituant alkylacide ou alcénylacide substitué, un radical cycloalcane comprenant 5-12 atomes de carbone, un radical benzyle, un radical phényle substitué par halogène ou alkyle,
des groupes alcoxy avec alcoxy en (C1-C24), avec des chaînes hydrocarbonées linéaires ou ramifiées,
un groupe cycloalcoxy en (C5-12),
un groupe phénoxy substitué par halogène ou alkyle, un groupe benzyloxy,
un groupe alkyléther O-(CR^{I}₂-CR^{I}₂)-O-alk ou
un groupe alkylpolyéther O-(CR^{I}₂-CR^{I}₂O)ₐ-alk, avec a = 2-25, R^{I} représentant indépendamment H ou un groupe alkyle, alk représentant une chaîne alkyle linéaire ou ramifiée, saturée ou insaturée comprenant 1-30 atomes de carbone (C1-C30),
A représente une chaîne hydrocarbonée linéaire ou ramifiée, saturée ou insaturée, aliphatique, aromatiques ou aliphatique/aromatique mixte, divalente en C1-C30.

3. Procédé pour la préparation de mercaptoorganyl(alcoxysilanes) selon la revendication 1, **caractérisé en ce que** les bis(alcoxysilylorganyl)polysulfures sont des mélanges de composés de formule générale I.

4. Procédé pour la préparation de mercaptoorganyl(alcoxysilanes) selon la revendication 1, **caractérisé en ce qu'**on mélange le bis(alcoxysilylorganyl)polysulfure à hydrogéner avec une substance polaire ou non polaire, protique ou aprotique.

5. Procédé pour la préparation de mercaptoorganyl(alcoxysilanes) selon la revendication 1, **caractérisé en ce qu'**on réalise l'hydrogénation à une pression de 10 à 250 bars.

6. Procédé pour la préparation de mercaptoorganyl(alcoxysilanes) selon la revendication 1, **caractérisé en ce qu'**on réalise l'hydrogénation à une températures de 50 à 250°C.

7. Procédé pour la préparation de mercaptoorganyl(alcoxysilanes) selon la revendication 1, **caractérisé en ce que** le catalyseur contient comme composants catalytiquement actifs du nickel, du cobalt, du rhodium, du ruthénium, du palladium, de l'iridium ou du platine.

8. Procédé pour la préparation de mercaptoorganyl(alcoxysilanes) selon la revendication 1, **caractérisé en ce que** le composant catalytiquement actif est en outre dopé ou contient des composants supplémentaires.

9. Procédé pour la préparation de mercaptoorganyl(alcoxysilanes) selon la revendication 8, **caractérisé en ce que** le composant catalytiquement actif contient un ou plusieurs métaux alcalins, métaux alcalino-terreux, éléments du 3ème groupe principal, éléments du 4ème groupe principal, éléments du Sème groupe principal, éléments du 6ème groupe principal, éléments du 7ème groupe principal, ou éléments de groupes secondaires.

10. Procédé pour la préparation de mercaptoorganyl(alcoxysilanes) selon la revendication 1, **caractérisé en ce que** la concentration en catalyseur, par rapport au métal catalytiquement actif, est de 0,0001 à 1 mmole par 1 g de bis(alcoxysilylorganyl)polysulfure.

11. Procédé pour la préparation de mercaptoorganyl(alcoxysilanes) selon la revendication 1, **caractérisé en ce qu'**on réalise le procédé par lots.

12. Procédé pour la préparation de mercaptoorganyl(alcoxysilanes) selon la revendication 1, **caractérisé en ce qu'**on le réalise en continu.

13. Procédé pour la préparation de mercaptoorganyl(alcoxysilanes) selon la revendication 1, **caractérisé en ce que** le mélange réactionnel contient des additifs.
